# EUROPÄISCHE PATENTANMELDUNG

(11) **EP 4 509 739 A1**
(43) Veröffentlichungstag der Anmeldung: **19.02.2025**
(21) Anmeldenummer: 24191037.1
(22) Anmeldetag: 26.07.2024
(51) Int. Cl.: F16H 57/023, F16H 57/08

(54) **PLANETENTRÄGERVORRICHTUNG MIT EINEM SICHERUNGSELEMENT FÜR EINEN BOLZEN**

(30) Priorität: 02.08.2023 DE 102023207385
(71) Anmelder: ZF Friedrichshafen AG, 88046 Friedrichshafen (DE)
(72) Erfinder: Riedisser, Thomas, 88138 Sigmarszell (DE); Margraf, Christoph, 88677 Markdorf (DE); Doepfert, Hagen, 88131 Lindau (DE); Guehrer, Ralph, 88079 Kressbronn (DE)
(74) Vertreter: ZF Friedrichshafen AG

(57) **Zusammenfassung**

Die vorliegende Erfindung betrifft eine Planetenträgervorrichtung mit einem Sicherungselement (1), einem Bolzen (2) und einem Planetenträger (3) eines Planetenradsatzes. Das Sicherungselement (1) weist einen ersten Trägeranlageabschnitt (11), einen ersten Bolzenanlageabschnitt (13) und einen ersten Befestigungsbereich (15) auf. Der erste Bolzenanlageabschnitt (13) beschränkt eine Bewegung des Sicherungselements (1) relativ zu dem Bolzen (2). Der erste Bolzenanlageabschnitt (13) überschneidet den Bolzen (2) in radialer Richtung. Der erste Trägeranlageabschnitt (11) beschränkt eine Bewegung des Sicherungselements (1) relativ zu dem Planetenträger (3). Der erste Trägeranlageabschnitt (11) ist in einer radialen Richtung außerhalb des Bolzens (2) vorgesehen. Das Sicherungselement (1) ist mittels des ersten Befestigungsbereichs (15) an dem Bolzen (2) angebunden. Der Planetenträger (3) weist eine Anlageaussparung in radialer Richtung auf, in der der erste Trägeranlageabschnitt (11) vorgesehen ist. Der Bolzen (2) ist an dem Planetenträger (3) bezüglich einer axialen Richtung gelagert.

## Beschreibung

### Technisches Gebiet

Die vorliegende Erfindung bezieht sich auf eine Planetenträgervorrichtung mit einem Sicherungselement für einen Bolzen.

### Stand der Technik

Eine Planetenträgervorrichtung wird beispielsweise in Planetengetrieben verwendet. In einem Planetenträger ist ein Bolzen gelagert, der ein Planetenrad drehbar stützt. Aufgrund von Zahntangentialkräften kommt es zu einer Verformung der Aufnahmeflächen für den Bolzen in dem Planetenträger. Dies führt zu Bewegungen des Bolzens und verursacht ein Wandern des Bolzens in axialer Richtung und ein Verdrehen des Bolzens um die axiale Richtung. Um dieses Wandern zu beschränken ist es bekannt, den Planetenradträger zweiteilig auszuführen und den Bolzen in axialer Richtung beidseitig mit dem Planetenradträger abzudecken und zu stützen.

Der vorliegenden Erfindung liegt die Aufgabe zugrunde, eine verbesserte Planetenträgervorrichtung bereitzustellen, mit der ein Wandern des Bolzens beschränkt werden kann.

Die Aufgabe wird durch eine Planetenträgervorrichtung mit den Merkmalen aus den unabhängigen Ansprüchen gelöst. Vorteilhafte Weiterbildungen sind Gegenstand der abhängigen Ansprüche.

### Darstellung der Erfindung

Die vorliegende Erfindung betrifft eine Planetenträgervorrichtung mit einem Sicherungselement, einem Bolzen und einem Planetenträger eines Planetenradsatzes. Die Planetenträgervorrichtung kann in einem Planetengetriebe verwendet werden. Beispielsweise kann das Planetengetriebe ein Minus-Planetengetriebe, oder ein Plus-Planetengetriebe, mit einer geraden Anzahl an Planetenradstufen sein. Der Bolzen und der Planetenträger können aus unterschiedlichen Materialien hergestellt sein. Beispielsweise kann der Planetenträger aus Aluminium und der Bolzen aus Stahl hergestellt sein.

Das Sicherungselement weist einen ersten Trägeranlageabschnitt, einen ersten Bolzenanlageabschnitt und einen ersten Befestigungsbereich auf. Der erste Trägeranlageabschnitt beschränkt eine Bewegung des Sicherungselements relativ zu dem Planetenträger. Der erste Trägeranlageabschnitt ist in einer radialen Richtung außerhalb des Bolzens vorgesehen. Der Trägeranlageabschnitt kann an dem Planetenträger anliegen. Das erste Trägeranlageelement kann an dem Bolzenanlageabschnitt vorgesehen sein. Der erste Bolzenanlageabschnitt beschränkt eine Bewegung des Sicherungselements relativ zu dem Bolzen. Der Bolzenanlageabschnitt kann an dem Bolzen anliegen. Der erste Bolzenanlageabschnitt kann beispielsweise eine Positionierungshilfe des Sicherungselements innerhalb des Bolzens in axialer Richtung darstellen. Der erste Bolzenanlageabschnitt überschneidet den Bolzen in radialer Richtung. Eine axiale Richtung kann die Richtung sein, in der sich die Bolzenachse erstreckt. Eine radiale Richtung kann die Richtung von der Drehachse des Planetenträgers zu dem Bolzen sein. Das Sicherungselement ist mittels des ersten Befestigungsbereichs an dem Bolzen angebunden. Der Befestigungsbereich stellt eine dauerhafte Positionierung des Sicherungselements relativ zu dem Bolzen sicher.

Das Sicherungselement (1) kann als Spannstift ausgeführt werden und einen Schlitz aufweisen und federelastisch einen ersten Bolzenanlageabschnitt oder einen zweiten Bolzenanlageabschnitt spielfrei kontaktieren.

Der Planetenträger weist eine Anlageaussparung in radialer Richtung auf, in der der erste Trägeranlageabschnitt vorgesehen ist. Der Bolzen ist an dem Planetenträger bezüglich einer axialen Richtung gelagert. Beispielsweise ist der Bolzen in eine entsprechende Bohrung in dem Planetenträger eingepresst oder spielbehaftet gefügt. Der Bolzen kann hohl gestaltet sein. Der Bolzen kann einen Innendurchmesser aufweisen. Alternativ kann der Bolzen aus einem Vollmaterial gebildet sein, oder Sacklochbohrungen auf beiden Stirnseiten in axialer Richtung aufweisen. Der Bolzen kann an seinen Stirnflächen in axialer Richtung Aussparungen zur Anlage von Bolzenanlageabschnitten aufweisen, die mit den Anlageaussparungen in dem Planetenträger fluchten. Dadurch lässt sich eine Rotation des Bolzens um die Bolzenachse beschränken.

In einer Ausführungsform kann der erste Bolzenanlageabschnitt den ersten Befestigungsbereich bilden. Der erste Befestigungsbereich kann mittels einer zylindrischen Bohrung in dem Bolzen gebildet sein, in der der Bolzenanlageabschnitt gehalten wird. Das Sicherungselement kann einen kreisförmigen Querschnitt haben. Alternativ kann der Querschnitt auch elliptisch oder halbkreisförmig gestaltet sein. Beispielsweise kann das Sicherungselement ein Stift oder ein geschlitzter Stift sein. Der Schlitz dient der Verformbarkeit des Stifts während der Montage des Stifts in den Planetenträger 3. Der Stift kann aus gehärtetem Metall gebildet sein. Der Stift kann in radialer Richtung angeordnet sein. Das hat den Vorteil, dass der Stift quer zu der Zahntangentialkraft des Planetenrads angeordnet ist. Außerdem ist der Befestigungsbereich außerhalb eines Bereichs des Planetenträgers, der aufgrund der Zahntangentialkräfte verformt wird. Damit wird ein Wandern des Stifts in dem Befestigungsbereich reduziert. Insbesondere bei einem geschlitzten Stift mit exzentrischem Schwerpunkt besteht bei radialer Anordnung der Vorteil, dass sich der Stift nicht aufgrund der Zentrifugalkraft mit seinem Schwerpunkt radial nach außen dreht. Die Anlageaussparung des Planetenträgers kann eine kreisförmige Bohrung sein, in der der erste Trägeranlageabschnitt eingesetzt ist. Alternativ können in dem Bolzen zwei bezogen auf die Mittelachse des Bolzens gegenüberliegende Bolzenanlageabschnitte vorgesehen sein, die jeweils einen Befestigungsabschnitt bilden. Alternativ kann die Anlageaussparung als eine Nut in radialer Richtung ausgebildet sein. Dadurch wird die Sicherung des Sicherungselements relativ zu dem Bolzen weiter verbessert.

In einer Ausführungsform kann das Sicherungselement einen zweiten Bolzenanlageabschnitt aufweisen. Das Sicherungselement kann einen kreisförmigen Querschnitt haben. Alternativ kann der Querschnitt auch elliptisch oder halbkreisförmig gestaltet sein. Beispielsweise kann das Sicherungselement ein gehärteter oder ungehärteter Stift, oder ein geschlitzter Stift sein. Der zweite Bolzenanlageabschnitt kann den Bolzen in radialer Richtung überschneiden. Der zweite Bolzenanlageabschnitt kann bezogen auf den ersten Bolzenanlageabschnitt gegenüber dem ersten Trägeranlageabschnitt angeordnet sein. Der erste Befestigungsbereich kann zwischen dem ersten Bolzenanlageabschnitt und dem zweiten Bolzenanlageabschnitt angeordnet sein. Der erste Befestigungsbereich kann mittels einer Ausbauchung senkrecht zu der radialen Richtung gestaltet sein. Die Ausbauchung kann beispielsweise in axialer Richtung ausgerichtet sein. Die Ausbauchung beschränkt eine Bewegung des Sicherungselements in Richtung der Mittelachse des Sicherungselements, beispielsweise in radialer Richtung. Beispielsweise kann die Ausbauchung mit dem zweiten Bolzenanlagebereich kombiniert werden, der zusätzlich einen Befestigungsbereich mittels Einpressen des Sicherungselements bildet. Dadurch wird die Sicherung des Sicherungselements relativ zu dem Bolzen weiter verbessert.

In einer Ausführungsform kann der Bolzen hohl gestaltet sein. Das Sicherungselement kann einen ersten Zentralverbindungsabschnitt und einen zweiten Trägeranlageabschnitt aufweisen. Der erste Befestigungsbereich kann bezogen auf den Bolzen in der axialen Richtung gegenüber dem ersten Bolzenanlageabschnitt angeordnet sein und sich in radialer Richtung erstrecken. Der zweite Trägeranlageabschnitt kann bezogen auf den Bolzen in der axialen Richtung gegenüber dem ersten Trägeranlageabschnitt angeordnet sein und sich in radialer Richtung außerhalb des Bolzens erstrecken. Das Sicherungselement kann einen Zentralverbindungsabschnitt aufweisen, der den ersten Trägeranlageabschnitt mit dem ersten Befestigungsbereich verbindet und sich in axialer Richtung durch den Bolzen hindurch erstreckt.

In einer Ausführungsform kann das Sicherungselement einen dritten Trägeranlageabschnitt, einen vierten Trägeranlageabschnitt, einen zweiten Bolzenanlageabschnitt, einen zweiten Befestigungsbereich, einen zweiten Zentralverbindungsabschnitt und einen Radialverbindungsabschnitt aufweisen. Der dritte und vierte Trägeranlageabschnitt, der zweite Bolzenanlageabschnitt und der zweite Befestigungsbereich können sich bezogen auf eine Mittelachse des Bolzens in eine andere radiale Richtung bezüglich, beispielsweise jeweils gegenüber des ersten und zweiten Trägeranlageabschnitts, des ersten Bolzenanlageabschnitts und des ersten Befestigungsbereichs erstrecken. Der erste Befestigungsbereich kann in radialer Richtung länger als der zweite Befestigungsbereich sein. Dadurch kann eine Ausbildung des ersten und zweiten Befestigungsbereichs mittels Umformens erleichtert werden. Der Bolzen kann hohl gestaltet sein. Der Planetenträger kann eine zweite Anlageaussparung in radialer Richtung aufweisen, in der der zweite Trägeranlageabschnitt vorgesehen ist. Der zweite Zentralverbindungsabschnitt kann den dritten Trägeranlageabschnitt mit dem zweiten Befestigungsbereich verbinden und sich in axialer Richtung durch den Bolzen hindurch erstrecken. Der Radialverbindungsabschnitt kann den ersten Trägeranlageabschnitt und den dritten Trägeranlageabschnitt miteinander verbinden.

In einer Ausführungsform können zwei Sicherungselemente bezüglich des Bolzens gegenüberliegend angeordnet sein. Der Bolzen kann hohl gestaltet sein. Der Bolzen kann einen Innendurchmesser aufweisen. Der erste Trägeranlageabschnitt und der erste Bolzenanlageabschnitt können plattenförmig gestaltet sein. Beispielsweise können der erste Trägeranlageabschnitt und der erste Bolzenanlageabschnitt gemeinsam eine plattenförmige Lasche bilden, die sich von dem Befestigungsbereich aus radial nach außen erstrecken. Beispielsweise können zwei in radialer Richtung gegenüberliegende Laschen vorgesehen sein. Die Breite des ersten Trägeranlageabschnitts und des ersten Bolzenanlageabschnitts bezüglich der Erstreckungsrichtung kann kleiner als der Innendurchmesser des Bolzens sein. Der erste Befestigungsbereich kann hohlzylinderförmig gestaltet sein und sich in der axialen Richtung innerhalb des Bolzens erstrecken. Der erste hohlzylindrische Befestigungsbereich kann mittels einer sich in Einpressrichtung erstreckenden Kuppe auf der in Einpressrichtung vorderen Seite geschlossen sein. Ein Außendurchmesser des ersten Befestigungsbereichs kann an dem Innendurchmesser des Bolzens angebunden sein.

In einer Ausführungsform kann das Sicherungselement ferner einen zweiten Trägeranlageabschnitt und einen zweiten Bolzenanlageabschnitt aufweisen. Der Bolzen kann hohl gestaltet sein. Der Bolzen kann einen Innendurchmesser aufweisen. Der zweite Trägeranlageabschnitt und der zweite Bolzenanlageabschnitt kann jeweils bezogen auf den Bolzen in der axialen Richtung gegenüber dem ersten Trägeranlageabschnitt und dem zweiten Bolzenanlageabschnitt angeordnet sein und sich in radialer Richtung außerhalb des Bolzens erstrecken. Beispielsweise können der erste Trägeranlageabschnitt und der erste Bolzenanlageabschnitt gemeinsam eine plattenförmige Lasche bilden, die sich von dem Befestigungsbereich aus radial nach außen erstreckt. Beispielsweise können zwei in radialer Richtung gegenüberliegende Laschen vorgesehen sein. Die Breite des ersten Trägeranlageabschnitts und des ersten Bolzenanlageabschnitts bezüglich der Erstreckungsrichtung kann kleiner als der Innendurchmesser des Bolzens sein. Der zweite Trägeranlageabschnitt und der erste Befestigungsbereich können bezogen auf den Bolzen in axialer Richtung gegenüber dem ersten Trägeranlageabschnitt angeordnet sein und sich in radialer Richtung erstrecken. Das Sicherungselement kann einen ersten Zentralverbindungsabschnitt aufweisen, der den ersten Trägeranlageabschnitt mit dem ersten Befestigungsbereich verbinden, sich durch den Bolzen hindurch erstrecken und hohlzylinderförmig gestaltet sein kann. Der erste Befestigungsbereich kann mittels Umformens eines Endabschnitts des ersten Zentralverbindungsabschnitts ringförmig gestaltet sein und einen Außendurchmesser aufweisen, der größer als der Innendurchmesser des Bolzens ist. Alternativ kann der Befestigungsbereich als eine oder mehrere Laschen gebildet werden.

In einer Ausführungsform können zwei Sicherungselemente bezogen auf den Bolzen gegenüberliegend angeordnet sein. Der Bolzen kann hohl gestaltet sein. Der erste Trägeranlageabschnitt kann plattenförmig gestaltet sein. Beispielsweise kann der erste Trägeranlageabschnitt eine plattenförmige Lasche bilden, die sich von dem Bolzenanlageabschnitt aus radial nach außen erstreckt. Beispielsweise können zwei gegenüberliegende Laschen vorgesehen sein. Die Breite des ersten Trägeranlageabschnitts bezüglich der Erstreckungsrichtung kann kleiner als der Innendurchmesser des Bolzens sein. Der erste Bolzenanlageabschnitt kann ringförmig gestaltet sein. Ein Außendurchmesser des ersten Bolzenanlageabschnitts kann größer als der Innendurchmesser des Bolzens sein. Der erste Bolzenanlageabschnitt eines der Sicherungselemente kann den ersten Befestigungsbereich bilden. Beispielsweise können die ersten Bolzenanlageabschnitte der Sicherungselemente die linke bzw. rechte Stirnfläche des Bolzens berühren. Damit können die ersten Bolzenanlageabschnitte der Sicherungselemente den ersten Befestigungsbereich bilden, wenn die beiden Sicherungselemente aneinander angebunden sind. Dadurch ist das Sicherungselement in dem Bolzen gesichert und gleichzeitig ist der Bolzen mittels der ersten Trägeranlageabschnitte relativ zu dem Planetenträger gesichert.

In einer Ausführungsform kann das Sicherungselement ferner einen Innenbolzen aufweisen. Der Innenbolzen kann zylindrisch gestaltet sein. Der Innenbolzen kann alternativ hohlzylindrisch gestaltet sein. Der Innenbolzen kann sich innerhalb des Bolzens in axialer Richtung erstrecken. Der Innenbolzen kann an beiden Enden in axialer Richtung jeweils einen zylindrischen Vorsprung aufweisen. Die zylindrischen Vorsprünge können koaxial zu dem Innenbolzen angeordnet sein. Ein Innendurchmesser des ersten Bolzenanlageabschnitts kann an einem Außendurchmesser eines Vorsprungs angebunden sein. Alternativ kann der Innenzylinder ein Sicherungselement an einem Ende in axialer Richtung ausbilden, anstatt das Sicherungselement mittels des Vorsprungs anzubinden. Die Vorsprünge können sich von einer Schulterfläche weg erstrecken, an der der Bolzenanlageabschnitt anliegen kann. In axialer Richtung neben der Schulterfläche kann eine umlaufende Nut an dem Vorsprung vorgesehen sein, in die der Innenumfang des Bolzenanlageabschnitts einrasten kann, wenn er in Berührung mit der Schulterfläche ist. Der Innenumfang kann radial nach außen geschlitzt sein, so dass sich radial nach innen weisende Zähne ergeben, deren Zahnspitzen in Berührung mit dem Vorsprung sind bzw. in der Nut eingerastet sind. Der Vorsprung kann in axialer Richtung über den Bolzenanlageabschnitt hinaus ragen. In diesem Fall kann der Vorsprung zu einem Niet umgeformt werden, der den Bolzenanlageabschnitt an die Schulterfläche drückt.

In einer Ausführungsform kann der erste Bolzenanlageabschnitt einen hohlzylindrischen Abschnitt aufweisen, der sich von dem ersten Bolzenanlageabschnitt innerhalb des Bolzens erstreckt. Die hohlzylindrischen Abschnitte der beiden gegenüberliegend angeordneten Sicherungselemente können innerhalb des Bolzens aneinander angebunden sein. Alternativ kann anstatt des hohlzylindrischen Abschnitts ein zylindrischer Abschnitt aus Vollmaterial vorgesehen sein. An den stirnseitigen Enden des ersten Sicherungselements in axialer Richtung können Zentrierbohrungen vorgesehen sein.

Beispielsweise können stirnseitige Endflächen der gegenüberliegenden hohlzylindrischen Abschnitte miteinander pressverschweißt, reibverschweißt, mittels Laser miteinander verbunden, verpresst, rastiert oder geclipt sein. Beispielsweise kann ein erstes Sicherungselement am Ende des hohlzylindrischen Abschnitts einen Vorsprung aufweisen, der innerhalb des Bolzens eine um die axiale Richtung umlaufende Nut aufweist. Ein zweites Sicherungselement kann an einem Endbereich des hohlzylindrischen Abschnitts eine um die axiale Richtung umlaufende Rippe aufweisen. Die umlaufende Rippe kann einen dreieckigen Querschnitt haben, der mit einer Spitze radial nach innen weist. Alternativ kann die umlaufende Rippe auch einen bogenförmigen oder rechteckigen Querschnitt haben. Der Vorsprung des ersten Sicherungselements kann in dem montierten Zustand so in den hohlzylindrischen Abschnitt des zweiten Sicherungselements eingeschoben sein, dass die Rippe in axialer Richtung in der umlaufenden Nut angeordnet ist. Damit sind die hohlzylindrischen Abschnitte des gegenüberliegend angeordneten ersten und zweiten Sicherungselements innerhalb des Bolzens aneinander angebunden.

In einer Ausführungsform, in der der erste Bolzenanlageabschnitt einen hohlzylindrischen Abschnitt aufweist, der sich von dem ersten Bolzenanlageabschnitt innerhalb des Bolzens erstreckt, kann der hohlzylindrische Abschnitt den ersten Befestigungsbereich aufweisen. Der Bolzen kann einen Innendurchmesser aufweisen. Ein Außendurchmesser des hohlzylindrischen Abschnitts kann mittels des ersten Befestigungsbereichs an dem Innendurchmesser des Bolzens angebunden sein. Beispielsweise kann der Befestigungsbereich gerändelt oder gespreizt sein. Der Befestigungsbereich kann um die axiale Richtung umlaufende Rippen aufweisen. Die umlaufenden Rippen können einen dreieckigen Querschnitt aufweisen, dessen eine Ecke radial nach innen weist und in einer axialen Richtung entgegen einer Einpressrichtung versetzt ist. Beispielsweise kann der dreieckige Querschnitt eine Sägezahnform aufweisen.

In einer Ausführungsform kann der Bolzen hohl gestaltet sein. Der Bolzen kann einen Innendurchmesser aufweisen. Es können zwei Sicherungselemente bezogen auf den Bolzen gegenüberliegend angeordnet sein. Der erste Trägeranlageabschnitt kann plattenförmig gestaltet sein. Beispielsweise kann der erste Trägeranlageabschnitt eine plattenförmige Lasche bilden, die sich von dem Befestigungsbereich aus radial nach außen erstreckt. Beispielsweise können zwei gegenüberliegende Laschen vorgesehen sein. Die Breite des ersten Trägeranlageabschnitts bezüglich der Erstreckungsrichtung kann größer als der Innendurchmesser des Bolzens sein. Der erste Bolzenanlageabschnitt kann ringförmig gestaltet sein.

Der erste Bolzenanlageabschnitt kann einen hohlzylindrischen Abschnitt aufweisen, der sich von dem ersten Bolzenanlageabschnitt innerhalb des Bolzens erstreckt. An dem Ende des hohlzylindrischen Abschnitts in axialer Richtung gegenüberliegend zu dem ersten Bolzenanlageabschnitt kann eine Aufweitung mit einem Außendurchmesser vorgesehen sein. Der Außendurchmesser des hohlzylindrischen Abschnitts kann kleiner als der Außendurchmesser der Aufweitung sein. Der Außendurchmesser des hohlzylindrischen Abschnitts kann größer als der Innendurchmesser des Bolzens sein.

Der Bolzen kann in einem mittleren Bereich in axialer Richtung eine Aushöhlung mit einem Innendurchmesser aufweisen. Der Innendurchmesser der Aushöhlung kann größer als der Innendurchmesser des Bolzens sein. Der Innendurchmesser der Aushöhlung kann größer als der Außendurchmesser der Aufweitung sein. Alternativ kann der Innendurchmesser der Aushöhlung an dem Außendurchmesser der Aufweitung anliegen und als Befestigungsbereich dienen. Die Aushöhlung kann die Aufweitung in axialer Richtung überdecken. Die Aufweitung kann den ersten Befestigungsbereich bilden und an der Aushöhlung angebunden sein. Beispielsweise kann ein Endbereich der Aufweitung in axialer Richtung an einem Endbereich der Aushöhlung anliegen. Der Außendurchmesser des hohlzylindrischen Abschnitts kann so dimensioniert sein, dass der hohlzylindrische Abschnitt den Innendurchmesser des Bolzens bei einer Montage berührt, beispielsweise einem Einpressen. Dabei kann sich das stirnseitige Ende des hohlzylindrischen Abschnitts so verformen, dass die Aufweitung gebildet wird. Der Außendurchmesser des hohlzylindrischen Abschnitts kann vor der Montage einen gestuften initialen Durchmesser aufweisen, der an einem vorderen Ende in Einpressrichtung größer ist. Damit wird die Aufweitung bei der Montage an dem in Einpressrichtung vorderen Ende des hohlzylindrischen Abschnitts gebildet.

In einer Ausführungsform kann das Sicherungselement zusätzlich zu einem ersten hohlzylindrischen Abschnitt einen zweiten Trägeranlageabschnitt und einen zweiten Bolzenanlageabschnitt aufweisen. Der Bolzen kann hohl gestaltet sein. Der Bolzen kann einen Innendurchmesser aufweisen. Der erste Trägeranlageabschnitt kann plattenförmig gestaltet sein. Der erste Bolzenanlageabschnitt kann ringförmig gestaltet sein. Ein Außendurchmesser des ersten Bolzenanlageabschnitts kann größer als der Innendurchmesser des Bolzens sein. Der erste hohlzylindrische Abschnitt kann sich von dem ersten Bolzenanlageabschnitt aus durch den Bolzen hindurch erstrecken. Der zweite Bolzenanlagebereich kann in radialer Richtung den Bolzen überschneiden. Der zweit Bolzenanlageabschnitts kann bezogen auf den Bolzen in axialer Richtung gegenüber des ersten Bolzenanlageabschnitts vorgesehen sein. Der erste Bolzenanlagebereich kann den ersten Befestigungsbereich bilden. Der erste Befestigungsbereich kann an einem Ende des ersten hohlzylindrischen Abschnitts angebunden sein. Der zweite Trägeranlageabschnitt kann sich von dem ersten Befestigungsbereich ringförmig radial auswärts erstrecken.

In einer Ausführungsform weist die Planetenträgervorrichtung einen Bolzen und einen Planetenträger eines Planetenradsatzes auf. Der Bolzen ist an dem Planetenträger bezüglich einer axialen Richtung gelagert. Der Bolzen weist an einem Ende in axialer Richtung einen ersten Befestigungsbereich auf. Ein Außendurchmesser des ersten Befestigungsbereichs ist an einem Innendurchmesser des Planetenträgers angebunden. Der erste Befestigungsbereich ist gerändelt. Eine umlaufende Nut ist bezogen auf den ersten Befestigungsbereich gegenüber von dem Ende des Bolzens in axialer Richtung angrenzend an den Befestigungsbereich vorgesehen. Der Bolzen kann hohl gestaltet sein und einen Innendurchmesser aufweisen. Alternativ kann der Bolzen aus einem Vollmaterial hergestellt sein.

In einer Ausführungsform weist die Planetenträgervorrichtung ein Sicherungselement, einen Bolzen und einen Planetenträger eines Planetenradsatzes auf. Das Sicherungselement weist einen ersten Trägeranlageabschnitt, einen zweiten Trägeranlageabschnitt, einen ersten Bolzenanlageabschnitt, einen zweiten Bolzenanlageabschnitt, einen ersten Befestigungsbereich, einen zweiten Befestigungsbereich und einen Axialverbindungsabschnitt auf.

Der Bolzen ist an dem Planetenträger bezüglich einer axialen Richtung gelagert. Der Bolzen ist hohl gestaltet. Der Bolzen kann einen Innendurchmesser aufweisen. Alternativ kann der Bolzen aus einem Vollmaterial gebildet sein. Der erste Trägeranlageabschnitt und der zweite Trägeranlageabschnitt beschränken eine Bewegung des Sicherungselements relativ zu dem Planetenträger. Der erste Trägeranlageabschnitt und der zweite Trägeranlageabschnitt können an dem Planetenträger angeordnet sein. Der erste Trägeranlageabschnitt und der zweite Trägeranlageabschnitt sind in radialer Richtung außerhalb des Bolzens vorgesehen. Der erste Trägeranlageabschnitt und der zweite Trägeranlageabschnitt sind bezogen auf den Bolzen in einer axialen Richtung gegenüberliegend zueinander angeordnet. Der erste Bolzenanlageabschnitt und der zweite Bolzenanlageabschnitt beschränken eine Bewegung des Sicherungselements relativ zu dem Bolzen. Der erste Bolzenanlageabschnitt und der zweite Bolzenanlageabschnitt können an dem Bolzen anliegen. Der erste Bolzenanlageabschnitt und der zweite Bolzenanlageabschnitt überschneiden den Bolzen in radialer Richtung.

Das Sicherungselement ist mittels des ersten Befestigungsbereichs und des zweiten Befestigungsbereichs an dem Planetenträger angebunden. Der Axialverbindungsabschnitt erstreckt sich in axialer Richtung außerhalb des Planetenträgers. Der Axialverbindungsabschnitt verbindet den ersten Trägeranlageabschnitt und den zweiten Trägeranlageabschnitt. Der Axialverbindungsabschnitt kann eine Länge haben, die größer als die Breite des Planetenträgers in axialer Richtung ist. In dem Planetenträger können Nuten vorgesehen sein, in denen die Trägeranlageabschnitte vorgesehen sind. An den Stirnflächen des Bolzens können Nuten vorgesehen sein, die mit den Nuten in dem Planetenträger fluchten. In den Nuten des Bolzens können die Bolzenanlageabschnitte vorgesehen sein.

### Kurze Beschreibung der Figuren

Figur 1A zeigt eine Schnittansicht einer Planetenträgervorrichtung gemäß einer ersten Ausführungsform.
Figur 1B zeigt in einer Schnittansicht einen Montagevorgang der Planetenträgervorrichtung gemäß der ersten Ausführungsform.
Figur 1C zeigt in einer Schnittansicht einen Montagevorgang einer Planetenträgervorrichtung gemäß einer Gestaltungsvariante der ersten Ausführungsform.
Figur 2A zeigt eine Schnittansicht einer Planetenträgervorrichtung gemäß einer zweiten Ausführungsform.
Figur 2B zeigt in einer Schnittansicht einen Montagevorgang der Planetenträgervorrichtung gemäß der zweiten Ausführungsform.
Figur 2C zeigt in einer Schnittansicht einen weiteren Montagevorgang der Planetenträgervorrichtung gemäß der zweiten Ausführungsform.
Figur 2D zeigt in einer Schnittansicht einen weiteren Montagevorgang der Planetenträgervorrichtung gemäß der zweiten Ausführungsform.
Figur 3A zeigt eine Schnittansicht einer Planetenträgervorrichtung gemäß einer dritten Ausführungsform.
Figur 3B zeigt in einer Schnittansicht einen Montagevorgang der Planetenträgervorrichtung gemäß der dritten Ausführungsform.
Figur 3C zeigt in einer Schnittansicht einen weiteren Montagevorgang der Planetenträgervorrichtung gemäß der dritten Ausführungsform.
Figur 4A zeigt eine Schnittansicht einer Planetenträgervorrichtung gemäß einer vierten Ausführungsform.
Figur 4B zeigt in einer Schnittansicht einen Montagevorgang der Planetenträgervorrichtung gemäß der vierten Ausführungsform.
Figur 4C zeigt in einer Schnittansicht einen weiteren Montagevorgang der Planetenträgervorrichtung gemäß der vierten Ausführungsform.
Figur 5A zeigt eine Schnittansicht einer Planetenträgervorrichtung gemäß einer fünften Ausführungsform.
Figur 5B zeigt in einer Schnittansicht einen Montagevorgang der Planetenträgervorrichtung gemäß der fünften Ausführungsform.
Figur 5C zeigt in einer Schnittansicht einen weiteren Montagevorgang der Planetenträgervorrichtung gemäß der fünften Ausführungsform.
Figur 6A zeigt eine Schnittansicht einer Planetenträgervorrichtung gemäß einer sechsten Ausführungsform.
Figur 6B zeigt in einer Schnittansicht einen Montagevorgang der Planetenträgervorrichtung gemäß der sechsten Ausführungsform.
Figur 6C zeigt in einer Schnittansicht einen weiteren Montagevorgang der Planetenträgervorrichtung gemäß der sechsten Ausführungsform.
Figur 6D zeigt in einer Schnittansicht einen weiteren Montagevorgang der Planetenträgervorrichtung gemäß der sechsten Ausführungsform.
Figur 6E zeigt in einer Schnittansicht einen weiteren Montagevorgang der Planetenträgervorrichtung gemäß der sechsten Ausführungsform.
Figur 7A zeigt eine Schnittansicht einer Planetenträgervorrichtung gemäß einer siebten Ausführungsform.
Figur 7B zeigt in einer Schnittansicht einen Montagevorgang der Planetenträgervorrichtung gemäß der siebten Ausführungsform.
Figur 8A zeigt eine Schnittansicht einer Planetenträgervorrichtung gemäß einer achten Ausführungsform.
Figur 8B zeigt in einer Schnittansicht einen Montagevorgang der Planetenträgervorrichtung gemäß der achten Ausführungsform.
Figur 9A zeigt eine Schnittansicht einer Planetenträgervorrichtung gemäß einer neunten Ausführungsform.
Figur 9B zeigt in einer Schnittansicht einen Montagevorgang der Planetenträgervorrichtung gemäß der neunten Ausführungsform.
Figur 10A zeigt eine Schnittansicht einer Planetenträgervorrichtung gemäß einer zehnten Ausführungsform.
Figur 10B zeigt eine Draufsicht eines Sicherungselements der Planetenträgervorrichtung gemäß der zehnten Ausführungsform.
Figur 11A zeigt eine Schnittansicht einer Planetenträgervorrichtung gemäß einer elften Ausführungsform.
Figur 11B zeigt eine Draufsicht eines Sicherungselements der Planetenträgervorrichtung gemäß der elften Ausführungsform.
Figur 12A zeigt eine Schnittansicht einer Planetenträgervorrichtung gemäß einer zwölften Ausführungsform.
Figur 12B zeigt eine Draufsicht eines Sicherungselements der Planetenträgervorrichtung gemäß der zwölften Ausführungsform.
Figur 13A zeigt eine Schnittansicht einer Planetenträgervorrichtung gemäß einer dreizehnten Ausführungsform.
Figur 13B zeigt eine Draufsicht eines Sicherungselements der Planetenträgervorrichtung gemäß der dreizehnten Ausführungsform.
Figur 14A zeigt eine Schnittansicht einer Planetenträgervorrichtung gemäß einer vierzehnten Ausführungsform.
Figur 14B zeigt eine Draufsicht eines Sicherungselements der Planetenträgervorrichtung gemäß der vierzehnten Ausführungsform.
Figur 15A zeigt eine Draufsicht einer Planetenträgervorrichtung gemäß einer fünfzehnten Ausführungsform.
Figur 15B zeigt eine Schnittansicht der Planetenträgervorrichtung gemäß der fünfzehnten Ausführungsform.
Figur 15C zeigt eine isometrische Ansicht der Planetenträgervorrichtung gemäß der fünfzehnten Ausführungsform.

### Detaillierte Beschreibung von Ausführungsformen

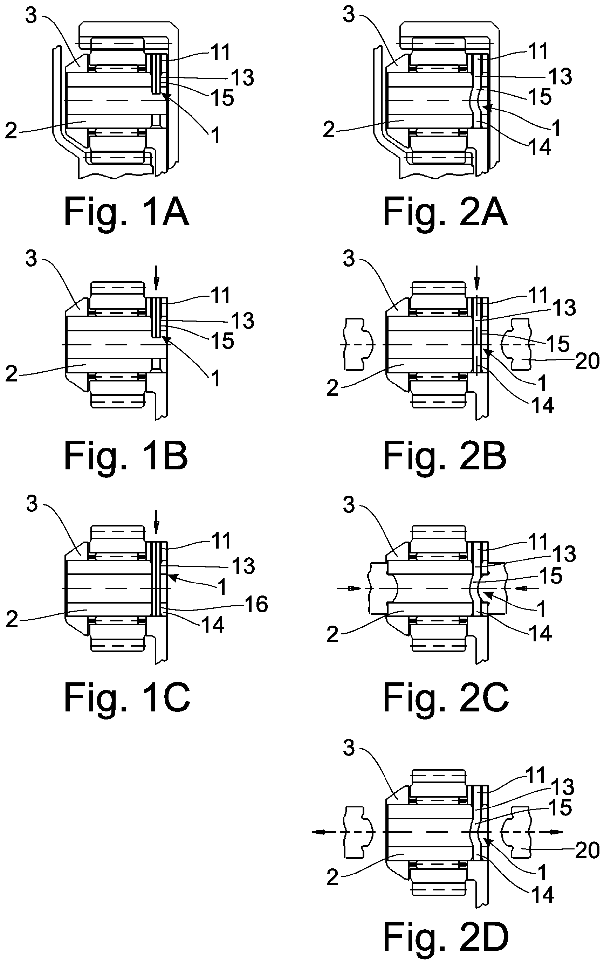

Figur 1A zeigt eine Schnittansicht einer Planetenträgervorrichtung gemäß einer ersten Ausführungsform. Die Planetenträgervorrichtung weist ein Sicherungselement 1, einen Bolzen 2 und einen Planetenträger 3 eines Planetenradsatzes auf. Vorliegend weist der Planetenradsatz drei Planetenräder auf, deren Drehachsen sich gleichmäßig in einem 120°-Winkel um die Drehachse des Planetenträgers 3 verteilen. Die übrigen Komponenten des Planetenradsatzes, wie Sonnenrad und Hohlrad sind in Figur 1 nicht dargestellt. Der Bolzen 2 ist an dem Planetenträger 3 bezüglich einer axialen Richtung gelagert, die vorliegend eine horizontale Richtung ist. Als Lagerstellen weist der Planetenträger 3 auf beiden Seiten des Bolzens 2 in axialer Richtung zylindrische Bohrungen auf, durch die sich der Bolzen 2 hindurch erstreckt. Zwischen den beiden Lagerstellen ist ein Planetenrad angeordnet, dass mittels eines Nadellagers an dem Bolzen 2 drehbar gelagert ist. Der Bolzen 2 ist hohl gestaltet.

Das Sicherungselement 1 ist in der ersten Ausführungsform als zylindrischer Stift gestaltet, der entlang seiner Längsachse einen Schlitz aufweist. Das Sicherungselement 1 hat einen ersten Trägeranlageabschnitt 11 an seinem oberen Ende, einen ersten Bolzenanlageabschnitt 13 an seinem unteren Ende. Der erste Bolzenanlageabschnitt 13 bildet einen ersten Befestigungsbereich 15. Der erste Trägeranlageabschnitt 11 ist in einer Anlageaussparung in radialer Richtung, vorliegend die vertikale Richtung, angeordnet. Vorliegend ist die Anlageaussparung als eine Bohrung des Planetenträgers 11 in radialer Richtung gestaltet. Dabei erstreckt sich der erste Trägeranlageabschnitt 11 in radialer Richtung außerhalb des Bolzens 2. Das Sicherungselement 1 kann sich in der vertikalen Bohrung des Planetenträgers 3 nur so weit in axialer Richtung bewegen, bis die zylindrische Außenfläche des Trägeranlageabschnitts 11 an der Innenfläche der vertikalen Bohrung anstößt. Damit beschränkt der erste Trägeranlageabschnitt 11 eine Bewegung des Sicherungselements 1 relativ zu dem Planetenträger 3.

Der erste Bolzenanlageabschnitt 13 ist in einer Bohrung des Bolzens 2 in radialer Richtung angeordnet und überschneidet den Bolzen 2 somit in radialer Richtung. Dabei ist der Durchmesser des ersten Bolzenanlageabschnitts 13 passend zu der vertikalen Bohrung in dem Bolzen 2, so dass das Sicherungselement 1 gegen ein Verrutschen in radialer Richtung gesichert ist. Der erste Bolzenanlageabschnitt 13 kann sich in der vertikalen Bohrung des Planetenträgers 3 in axialer Richtung nicht bewegen, da die zylindrische Außenfläche des ersten Bolzenanlageabschnitts 13 an der Innenfläche der vertikalen Bohrung anstößt. Insofern ist die Bewegung des Sicherungselements 1 relativ zu dem Bolzen 2 beschränkt und das Sicherungselement 1 ist mittels des ersten Befestigungsbereichs 15 an dem Bolzen 2 angebunden.

Figur 1B zeigt in einer Schnittansicht einen Montagevorgang der Planetenträgervorrichtung gemäß der ersten Ausführungsform. Hier wird das Sicherungselement 1 in radialer Richtung von außen nach innen in die vertikale Bohrung des Bolzens 2 eingepresst. Dabei verformt sich der erste Befestigungsbereich 15.

Figur 1C zeigt in einer Schnittansicht einen Montagevorgang einer Planetenträgervorrichtung gemäß einer Gestaltungsvariante der ersten Ausführungsform. Die Gestaltungsvariante unterscheidet sich von der ersten Ausführungsform dadurch, dass das Sicherungselement 1 einen zweiten Bolzenanlageabschnitt 14 gegenüber dem ersten Bolzenanlageabschnitt 11 aufweist, der einen zweiten Befestigungsbereich 16 bildet.

Dafür ist die obere Bohrung in dem Bolzen 2 so gestaltet, dass das Sicherungselement 1 Spiel hat. Insofern bildet vorliegende der erste Bolzenanlageabschnitt nicht den ersten Befestigungsbereich 15. Der zweite Bolzenanlageabschnitt 14 ist in einer entsprechenden Bohrung in dem Bolzen 2 vorgesehen. Die Montage des Sicherungselements gemäß der Gestaltungsvariante der ersten Ausführungsform erfolgt ebenfalls in der radialen Richtung von außen nach innen.

Figur 2A zeigt eine Schnittansicht einer Planetenträgervorrichtung gemäß einer zweiten Ausführungsform. Die zweite Ausführungsform unterscheidet sich von der Gestaltungsvariante der ersten Ausführungsform dadurch, dass das Sicherungselement nicht als geschlitzter Stift gestaltet ist, sondern als ein Stift aus Vollmaterial gestaltet ist. Außerdem bilden der erste und der zweite Bolzenanlageabschnitt 13, 14 keinen Befestigungsbereich. Der erste Befestigungsbereich 15 ist mittig zwischen dem ersten Bolzenanlageabschnitt 13 und dem zweiten Bolzenanlageabschnitt 14 vorgesehen. Der erste Befestigungsbereich 15 ist mittels einer Ausbauchung senkrecht zu der radialen Richtung gestaltet. Vorliegend ist die Ausbauchung in axialer Richtung ausgerichtet.

Figur 2B bis 2D zeigen in einer Schnittansicht einen Montagevorgang der Planetenträgervorrichtung gemäß der zweiten Ausführungsform. Zwei Werkzeuge 20 werden von beiden Seiten in axialer Richtung auf den Bolzen 2 zu bewegt. Das Werkzeug 20 hat eine plane Stirnfläche, die mit einer in radialer Richtung orientierten Stirnfläche des Bolzens 2 in Berührung kommt. Ferner weist das Werkzeug 20 an der planen Stirnfläche einen Vorsprung auf, der einen Außendurchmesser hat, der in den Innendurchmesser des Bolzens gleiten kann. Zwischen Vorsprung und der planen Stirnfläche ist ein um die axiale Richtung umlaufender Freistich vorgesehen. In Figur 2C ist gezeigt, wie der Vorsprung die Ausbauchung des Sicherungselements mittels Verformung des Sicherungselements 1 bildet, wenn die Vorsprünge in den Bolzen 2 gleiten, bis die plane Fläche des Werkzeugs 20 mit der Stirnfläche des Bolzens 2 in Berührung kommt. In Figur 2D ist das umgeformte Sicherungselement 1 gezeigt, nachdem das Werkzeug 20 aus dem Bolzen entfernt ist.

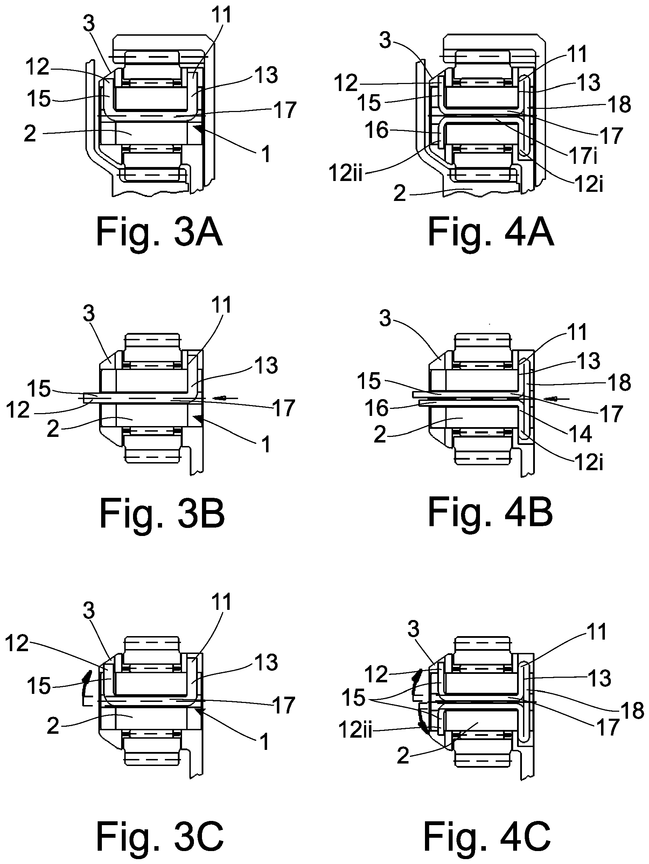

Figur 3A zeigt eine Schnittansicht einer Planetenträgervorrichtung gemäß einer dritten Ausführungsform. Die dritte Ausführungsform unterscheidet sich von der Gestaltungsvariante der ersten Ausführungsform dadurch, dass der Bolzen 2 zur Aufnahme des ersten Bolzenanlageabschnitts 13 als Anlageaussparung eine Nut in radialer Richtung aufweist. Ferner weist der Planetenträger 3 Nuten auf, die mit den Nuten in dem Bolzen 2 fluchten und in denen der erste Trägeranlageabschnitt 11 vorgesehen ist.

Das Sicherungselement 1 ist aus einem gebogenen Draht mit kreisförmigem Querschnitt gebildet. Der gebogene Draht weist zwei Schenkel auf, die sich in radialer Richtung erstrecken, und einen Abschnitt in axialer Richtung. Der gebogene Draht weist damit eine U Form auf. Der linke Schenkel bildet den ersten Befestigungsbereich 15 und den zweiten Trägeranlageabschnitt 12. Der rechte Schenkel bildet den ersten Trägeranlageabschnitt 11 und den ersten Bolzenanlageabschnitt 13. Der Abschnitt in axialer Richtung bildet einen ersten Zentralverbindungsabschnitt 17, der den ersten Trägeranlageabschnitt 11 mit dem ersten Befestigungsbereich 15 verbindet und sich in axialer Richtung durch den Bolzen 2 hindurch erstreckt. Vorliegend erstreckt sich der erste Befestigungsbereich 15 bezogen auf den Bolzen 2 in der axialen Richtung gegenüber dem ersten Trägeranlageabschnitt 11, also auf der linken Seite. Die beiden Schenkel liegen jeweils an dem Bolzen 2 und dem Planetenträger 3 an.

Figur 3B und 3C zeigen in einer Schnittansicht einen Montagevorgang der Planetenträgervorrichtung gemäß der dritten Ausführungsform. Der gebogene Draht weist vor der Montage lediglich einen Schenkel auf der rechten Seite auf. Der gebogene Draht wird in der axialen Richtung von der rechten Seite in den Bolzen 2 eingeführt. In Figur 3C ist gezeigt, wie das Ende des gebogenen Drahts auf der linken Seite nach oben gebogen wird. Dadurch wird der erste Befestigungsbereich 15 gebildet. Gleichzeitig wird damit ein zweiter Trägeranlageabschnitt 12 an dem Ende des linken Schenkels bereitgestellt. Dadurch ist das Sicherungselement 1 in dem Bolzen 2 gesichert und gleichzeitig ist der Bolzen 2 damit relativ zu dem Planetenträger 3 gesichert.

Figur 4A zeigt eine Schnittansicht einer Planetenträgervorrichtung gemäß einer vierten Ausführungsform. Die vierte Ausführungsform ist großteils eine um eine Mittelachse des Bolzens 2 gespiegelte Gestaltung des Sicherungselements 1 gemäß der dritten Ausführungsform. Insofern weist die vorliegende Ausführungsform einen dritten Trägeranlageabschnitt 12i, einen vierten Trägeranlageabschnitt 12ii, einen zweiten Bolzenanlageabschnitt 14, einen zweiten Zentralverbindungsabschnitt 17i und einen Radialverbindungsabschnitt 18 auf.

Der dritte und vierte Trägeranlageabschnitt 12i, 12ii, der zweite Bolzenanlageabschnitt 14 und der zweite Zentralverbindungsabschnitt 17i erstrecken sich bezogen auf eine Mittelachse des Bolzens 2 jeweils gegenüber des ersten und zweiten Trägeranlageabschnitts 11, 12, des ersten Bolzenanlageabschnitts 13 und des ersten Befestigungsbereichs 15. Vorliegend erstrecken sich erster und zweiter Bolzenlageabschnitt 13, 14 und erster und dritter Trägeranlageabschnitt 11, 12i auf der rechten Seite des Bolzens 2. Ferner weist der Planetenträger 3 eine zweite Anlageaussparung in radialer Richtung auf, in der der zweite Trägeranlageabschnitt 12 vorgesehen ist. Der zweite Zentralverbindungsabschnitt 17i verbindet den zweiten Bolzenanlageabschnitt 14 mit dem zweiten Befestigungsbereich 16 und erstreck sich in axialer Richtung durch den Bolzen 2 hindurch. Der Radialverbindungsabschnitt 18 verbindet den ersten Trägeranlageabschnitt 11 und den dritten Trägeranlageabschnitt 12i miteinander zu einem Schenkelverbund. Der zweite und der vierte Trägeranlageabschnitt 12, 12ii sind mittels zweier Schenkel gebildet. Dabei ist der Schenkel des zweiten Trägeranlageabschnitts 12 länger als der Schenkel des vierten Trägeranlageelements 12ii.

Figur 4B und 4C zeigen in einer Schnittansicht einen Montagevorgang der Planetenträgervorrichtung gemäß der vierten Ausführungsform. Der gebogene Draht weist vor der Montage lediglich den Schenkelverbund auf der rechten Seite auf. Der gebogene Draht wird in der axialen Richtung von der rechten Seite in den Bolzen 2 eingeführt. In Figur 4C ist gezeigt, wie die beiden Enden des gebogenen Drahts auf der linken Seite nach oben bzw. nach unten gebogen werden. Dadurch wird der erste und zweite Befestigungsbereich 15, 16 gebildet gleichzeitig wird damit ein zweiter und vierter Trägeranlageabschnitt 12, 12ii an den Enden der linken Schenkel bereitgestellt. Dadurch ist das Sicherungselement 1 in dem Bolzen 2 gesichert und gleichzeitig ist der Bolzen 2 damit relativ zu dem Planetenträger 3 gesichert.

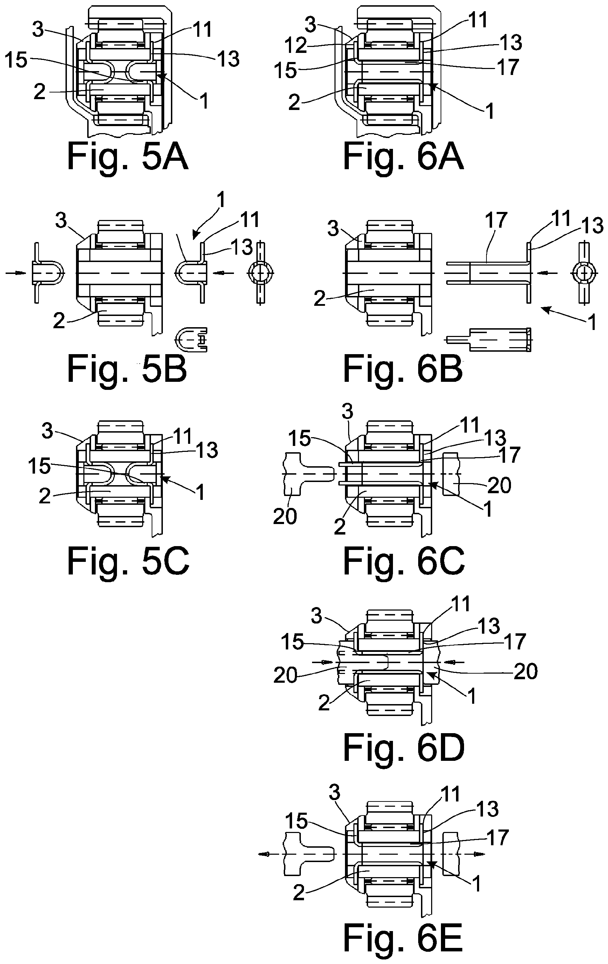

Figur 5A zeigt eine Schnittansicht einer Planetenträgervorrichtung gemäß einer fünften Ausführungsform. Vorliegend sind zwei Sicherheitselemente 1 auf gegenüberliegenden Seiten bezüglich des Bolzens 2 in axialer Richtung vorgesehen. Der erste Befestigungsbereich 15 ist hohlzylinderförmig gestaltet und erstreckt sich in der axialen Richtung innerhalb des Bolzens 2 bis zu einem mittleren Abschnitt des Bolzens 2. Am Ende des ersten Befestigungsbereichs 15 in dem Bolzen 2 ist ein domförmiger Verschluss des ersten Befestigungsbereichs 15 vorgesehen. Der erste Befestigungsbereich 15 ist an dem Innendurchmesser des Bolzens 2 angebunden. Der erste Trägeranlageabschnitt 11 und der erste Bolzenanlageabschnitt 13 sind plattenförmig gestaltet und erstrecken sich in der radialen Richtung nach oben und nach unten von dem ersten Befestigungsbereich 15 aus. Dabei ist die Breite bezüglich der Erstreckungsrichtung des ersten Trägeranlageabschnitts 11 und des ersten Bolzenanlageabschnitt 13 kleiner als der Innendurchmesser der Bolzens. Der erste Trägeranlageabschnitt 11 und der erste Bolzenanlageabschnitt 13 sind in radial ausgerichteten Nuten in dem Planetenträger 3 vorgesehen. Dabei erstreckt sich der zylindrische Befestigungsberiech 15 nach rechts über den ersten Träger- und Bolzenanlageabschnitt 11, 13 in axialer Richtung hinaus.

Figur 5B und 5C zeigen in einer Schnittansicht einen Montagevorgang der Planetenträgervorrichtung gemäß der fünften Ausführungsform. Die Sicherungselemente 1 werden von unterschiedlichen Seiten in der axialen Richtung mit dem domförmigen Verschluss voran in den Bolzen 2 eingepresst. Figur 5B zeigt ferner eine Draufsicht und eine Unteransicht des Sicherungselements 1. Figur 5C zeigt den eingepressten Zustand der beiden Sicherungselemente 1. Der erste Bolzenanlageabschnitt 13 liegt an dem Bolten 2 an und der erste Trägeranalageabschnitt 11 liegt an dem Planetenträger an.

Figur 6A zeigt eine Schnittansicht einer Planetenträgervorrichtung gemäß einer sechsten Ausführungsform. Vorliegend ist der erste Befestigungsbereich 15 bezogen auf den Bolzen 2 in der axialen Richtung gegenüber dem ersten Trägeranlageabschnitt 11 angeordnet. Das Sicherungselement 1 weist einen ersten Zentralverbindungsabschnitt 17 auf, der den ersten Trägeranlageabschnitt 11 mit dem ersten Befestigungsbereich 15 verbindet. Der erste Zentralverbindungsabschnitt 17 erstreckt sich durch den Bolzen 2 hindurch und ist hohlzylinderförmig gestaltet. Der erste Befestigungsbereich 15 erstreckt sich auf der linken Seite des Sicherungselements 1 ringförmig in radialer Richtung weg von dem Zentralverbindungsabschnitt 17. Der erste Trägeranlageabschnitt 11 und der erste Bolzenanlageabschnitt 13 sind plattenförmig gestaltet und erstrecken sich in der radialen Richtung nach oben und nach unten von dem ersten Befestigungsbereich 15 aus. Dabei ist die Breite bezüglich der Erstreckungsrichtung des ersten Trägeranlageabschnitts 11 und des ersten Bolzenanlageabschnitt 13 kleiner als der Innendurchmesser der Bolzens. Das Sicherungselement 1 weist ferner zweiten Trägeranlageabschnitt 12 auf. Der zweite Trägeranlageabschnitt 12 erstreckt sich bezogen auf den Bolzen 2 in der axialen Richtung gegenüber dem ersten Trägeranlageabschnitt 11 und in radialer Richtung außerhalb des Bolzens 2 von dem Befestigungsbereich 15 aus.

Figur 6B bis 6D zeigen in einer Schnittansicht einen Montagevorgang der Planetenträgervorrichtung gemäß der sechsten Ausführungsform. Das Sicherungselement 1 weist den ersten Befestigungsbereich 15 auf der linken Seite vor der Montage noch nicht auf und hat auf der linken Seite in zylindrisches Ende. In Figur 6B wird das Sicherungselement 1 in der axialen Richtung von der rechten Seite in den Bolzen 2 eingeführt. Figur 6B zeigt ferner eine Draufsicht und eine Unteransicht des Sicherungselements 1.

In Figur 6C ist gezeigt, wie an dem linken Ende des Sicherungselements 1 ein Werkzeug 20 und auf der rechten Seite des Sicherungselements 1 ein Gegenhalter mit zu dem Sicherungselement 1 weisender planen Stirnfläche bereitgestellt wird. Das Werkzeug 20 hat eine plane Stirnfläche, die zur Umformung des linken zylindrischen Endes des Sicherungselements 1 dient. Ferner weist das Werkzeug 20 an der planen Stirnfläche einen zylindrischen Vorsprung auf, der einen Außendurchmesser hat, der in den Innendurchmesser des linken zylindrischen Endes des Sicherungselements 1 gleiten kann. Der zylindrische Vorsprung und die plane Stirnfläche sind mit einem um die axiale Richtung umlaufenden Radius verbunden. Gleichzeitig wird der Gegenhalter nach links gedrückt.

In Figur 6D ist gezeigt, wie der zylindrische Vorsprung den ersten Befestigungsbereich 15 mittels Umformens ringförmig ausbildet. Dabei dringt das Werkzeug so tief in das Sicherungselement ein, bis sich der erste Befestigungsbereich 15 in radialer Richtung erstreckt und der erste Befestigungsbereich 15 die linke Stirnfläche des Bolzens 2 berührt. Außerdem erstreckt sich der zweite Trägeranlageabschnitt 12 außerhalb des ersten Befestigungsbereichs 15 und berührt den Planetenträger 3. Dadurch ist das Sicherungselement 1 in dem Bolzen 2 gesichert und gleichzeitig ist der Bolzen 2 damit relativ zu dem Planetenträger 3 gesichert. In Figur 6E ist das umgeformte Sicherungselement 1 gezeigt, nachdem das Werkzeug 20 aus dem Bolzen entfernt ist.

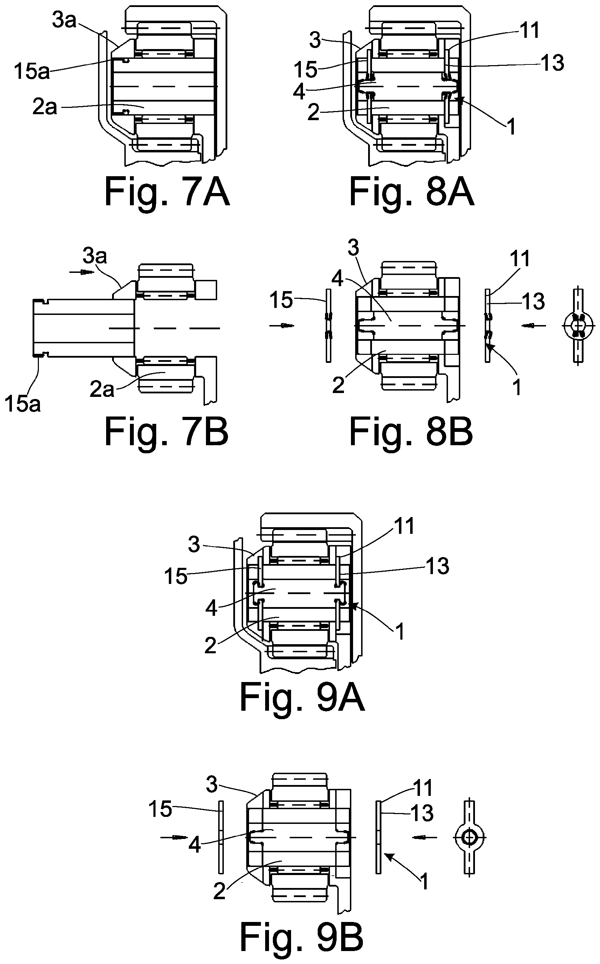

Figur 7A zeigt eine Schnittansicht einer Planetenträgervorrichtung gemäß einer siebten Ausführungsform. Die vorliegende Ausführungsform unterscheidet sich von den vorherigen dadurch, dass der Bolzen 2a an einem linken Ende in Figur 7A den ersten Befestigungsbereich aufweist. Insofern kann das Sicherungselement mit Träger- und Bolzenanlageabschnitte entfallen. Vorliegend ist der erste Befestigungsbereich 15a gerändelt. Der Außendurchmesser des ersten Befestigungsbereichs 15a ist in den Innendurchmesser des Planetenträgers 3a so eingepresst, dass der Bolzen 2a in axialer Richtung nicht mehr verschieblich relativ zu dem Planetenträger 3 ist. Ferner ist angrenzend an den ersten Befestigungsbereich 15a eine umlaufende Nut gegenüber von dem Ende des Bolzens 2a in axialer Richtung, also rechts von dem Befestigungsbereich 15a, vorgesehen. In die Nut fließt während des Einpressens des Bolzens 2a Material aus dem Planetenträger 3a und sorgt zusätzlich für eine Beschränkung der Bewegung des Bolzens 2a in axialer Richtung.

Figur 7B zeigt in einer Schnittansicht einen Montagevorgang der Planetenträgervorrichtung gemäß der siebten Ausführungsform. Der Bolzen 2a wird von links in die mittels zylindrischer Bohrungen gebildeter Lagerungen des Planetenträgers 3a eingepresst.

Figur 8A zeigt eine Schnittansicht einer Planetenträgervorrichtung gemäß einer achten Ausführungsform. Vorliegend werden in der Planetenträgervorrichtung zwei Sicherungselemente 1 verwendet, die bezogen auf den Bolzen 2 auf gegenüberliegenden Seiten angeordnet sind. Außerdem weist die Planetenträgeranordnung einen Innenbolzen 4 auf. Der Innenbolzen 4 ist zylindrisch gestaltet und erstreckt sich innerhalb des Bolzens 2 in axialer Richtung. Der Innenbolzen 4 ist beweglich bezüglich des Bolzens 2. An beiden Enden in axialer Richtung weist der Innenbolzen 4 zylindrische Vorsprünge auf. Die Sicherungselemente 1 sind über den Innendurchmesser des ersten Bolzenanlageabschnitts 13 an einem Außendurchmesser des zylindrischen Vorsprungs angebunden.

Dabei ist der erste Trägeranlageabschnitt 11 plattenförmig gestaltet und erstreckt sich in radialer Richtung nach oben und nach unten von dem Bolzenanlageabschnitt 15 aus. Dabei ist die Breite bezüglich der Erstreckungsrichtung des ersten Trägeranlageabschnitts 11 kleiner als der Innendurchmesser der Bolzens 2. Der erste Bolzenanlageabschnitt 13 ist ringförmig gestaltet. Der Bolzenanlageabschnitt 13 weist radial nach innen verlaufende Schlitze auf, so dass sich radial nach innen weisende Zähne bilden.

Figur 8B zeigt in einer Schnittansicht einen Montagevorgang der Planetenträgervorrichtung gemäß der achten Ausführungsform. Das Sicherungselement 1 wird so von links bzw. rechts auf die zylindrischen Vorsprünge des Innenbolzen 4 geschoben, dass die Zähne des Bolzenanlageabschnitts 13 Kontakt zu dem Außenumfang des zylindrischen Vorsprungs haben. Die Sicherungselemente werden bis zur Anlage an eine Schulterfläche geschoben bzw. aufgepresst, an der der zylindrische Vorsprung des Innenbolzens 4 vorgesehen ist. Bei dem Montagevorgang verformen sich die Zähne entgegen der Aufpressrichtung. Damit verkeilen sich die Zähne an dem zylindrischen Vorsprung und verhindern eine Bewegung des Sicherungselements 1 in eine Richtung weg von der Schulter. In montiertem Zustand berühren die ersten Bolzenanlageabschnitte 13 der Sicherungselemente 1 die linke bzw. rechte Stirnfläche des Bolzens 2. Damit bildet einer der ersten Bolzenanlageabschnitte 13 der Sicherungselemente 1 den ersten Befestigungsbereich 15. Dadurch ist das Sicherungselement 1 in dem Bolzen 2 gesichert und gleichzeitig ist der Bolzen 2 mittels der ersten Trägeranlageabschnitte 11 relativ zu dem Planetenträger 3 gesichert.

In einer alternativen Ausführungsform ist zusätzlich an den zylindrischen Vorsprüngen je eine umlaufende Nut vorgesehen, in die die Zähne einrasten können.

Figur 9A zeigt eine Schnittansicht einer Planetenträgervorrichtung gemäß einer neunten Ausführungsform. Die vorliegende Ausführungsform unterscheidet sich von der achten Ausführungsform dadurch, dass keine Zähne an dem Bolzenanlageabschnitt 13 vorgesehen sind. Stattdessen weist der zylindrische Vorspruch des Innenbolzens 4 eine Verdickung in der radialen Richtung außerhalb der Sicherungselemente 1 auf, an der der Bolzenanlageabschnitt 13 so anliegt, dass er sich in der axialen Richtung nicht von der Schulter des Innenbolzens 4 wegbewegen kann.

Figur 9B zeigt in einer Schnittansicht einen Montagevorgang der Planetenträgervorrichtung gemäß der neunten Ausführungsform. Hier werden zwei Sicherungselemente 1 von links und von rechts auf die zylindrischen Vorsprünge des Innenbolzens 4 aufgeschoben, bis die Bolzenanlageabschnitte 13 an den Schultern anliegen. Anschließend werden die zylindrischen Vorsprünge mittels Presswerkzeugen so in Richtung der Schultern gepresst, dass sich die zylindrischen Vorsprünge umformen. Dadurch entsteht die Verdickung außerhalb der Sicherungselemente 1 und die Sicherungselemente 1 sind mit dem Innenbolzen 4 vernietet.

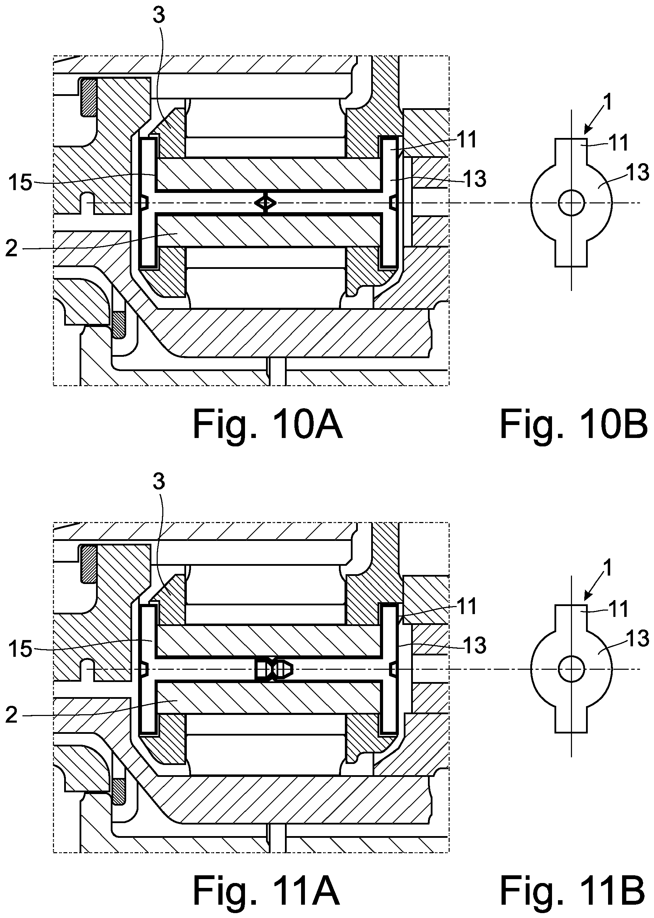

Figur 10A zeigt eine Schnittansicht einer Planetenträgervorrichtung gemäß einer zehnten Ausführungsform. Vorliegend sind zwei Sicherungselemente 1 bezogen auf den Bolzen 2 gegenüberliegend angeordnet. Der erste Trägeranlageabschnitt 11 ist plattenförmig gestaltet und erstreckt sich in radialer Richtung nach oben und nach unten von dem Außenumfang des ersten Bolzenanlageabschnitts 13. Der erste Trägeranlageabschnitt 11 ist in einer Nut in dem Planetenträger 3 vorgesehen, die in radialer Richtung angeordnet ist. Der erste Bolzenanlageabschnitt 13 weist einen hohlzylindrischen Abschnitt auf, der sich innerhalb des Bolzens 2 erstreckt. Die hohlzylindrischen Abschnitte der beiden Sicherungselemente 1 berühren sich mit ihren stirnseitigen Endflächen in einem mittleren Bereich des Bolzens 2. Die stirnseitigen Endflächen sind miteinander in montiertem Zustand pressverschweißt. Damit sind hohlzylindrischen Abschnitte der beiden gegenüberliegend angeordneten Sicherungselemente 1 innerhalb des Bolzens 2 aneinander angebunden.

In montiertem Zustand berühren die erste Bolzenanlageabschnitte 13 der Sicherungselemente 1 die linke bzw. rechte Stirnfläche des Bolzens 2. Damit bilden die ersten Bolzenanlageabschnitte 13 der Sicherungselemente 1 den ersten Befestigungsbereich 15. Dadurch ist das Sicherungselement 1 in dem Bolzen 2 gesichert und gleichzeitig ist der Bolzen 2 mittels der ersten Trägeranlageabschnitte 11 relativ zu dem Planetenträger 3 gesichert.

Figur 10B zeigt eine Draufsicht eines Sicherungselements der Planetenträgervorrichtung gemäß der zehnten Ausführungsform. Die Breite des ersten Trägeranlageabschnitt 11 ist größer als der Innendurchmesser des Bolzens 2. Der erste Bolzenanlageabschnitt 13 ist ringförmig gestaltet und überdeckt den ringförmigen Querschnitt des Bolzens 2.

Figur 11A zeigt eine Schnittansicht einer Planetenträgervorrichtung gemäß einer elften Ausführungsform. Die vorliegende Ausführungsform unterscheidet sich von der zehnten Ausführungsform dadurch, dass nicht zwei identische Sicherungselemente 1, sondern ein erstes Sicherungselement und ein zweites Sicherungselement verwendet werden. Dabei sind die Endbereiche der hohlzylindrischen Abschnitte des ersten und des zweiten Sicherungselements in dem mittleren Bereich des Bolzens 2 unterschiedlich gestaltet. Das links angeordnete erste Sicherungselement weist an seinem Endbereich einen Vorsprung auf, der innerhalb des Bolzens 2 eine um die axiale Richtung umlaufende Nut aufweist. Das rechts angeordnete Sicherungselement weist an seinem Endbereich eine um die axiale Richtung umlaufende Rippe auf. Die umlaufende Rippe hat einen dreieckigen Querschnitt, der mit einer Spitze radial nach innen weist. Der Vorsprung des ersten Sicherungselements ist in dem montierten Zustand so in den hohlzylindrischen Abschnitt des zweiten Sicherungselements eingeschoben, dass die Rippe in axialer Richtung in der umlaufenden Nut angeordnet ist. Damit ist das erste Sicherungselement in dem zweiten Sicherungselement eingerastet.

Figur 11B zeigt eine Draufsicht eines Sicherungselements der Planetenträgervorrichtung gemäß der elften Ausführungsform. Zur Beschreibung der Figur 11B wird auf die Figur 10B verwiesen.

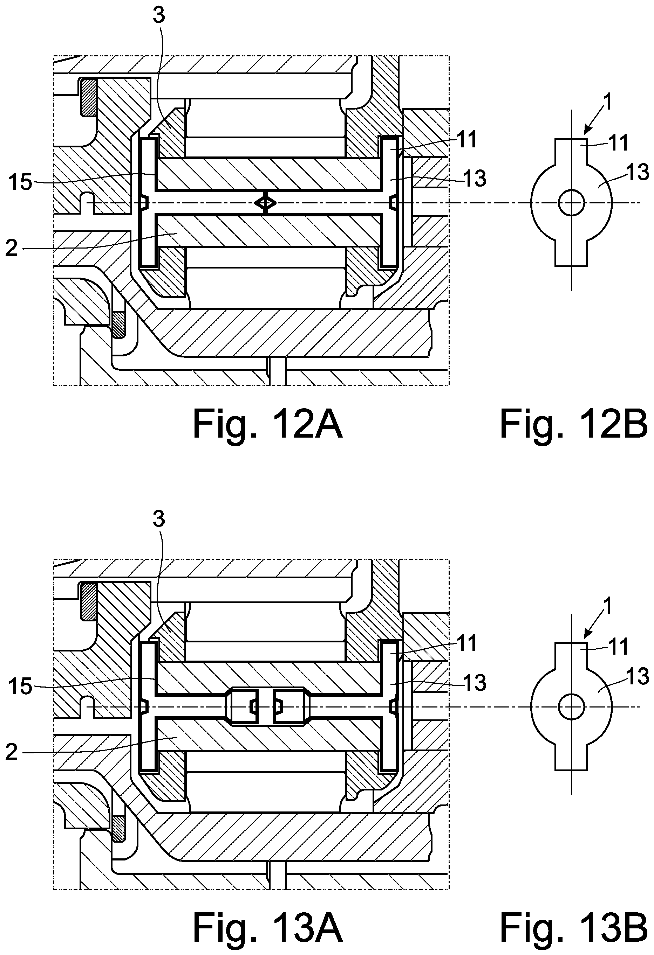

Figur 12A zeigt eine Schnittansicht einer Planetenträgervorrichtung gemäß einer zwölften Ausführungsform. Die vorliegende Ausführungsform unterscheidet sich von der zehnten Ausführungsform dadurch, dass die stirnseitigen Endflächen der beiden Sicherungselemente 1 nicht aneinander angebunden sind. Stattdessen weist der hohlzylindrische Abschnitt an seinem Außenumfang den ersten Befestigungsbereich 15 auf. Vorliegend weist der Außenumfang des ersten Befestigungsbereichs 15 eine Rändelung auf, an dem Innendurchmesser des Bolzens anliegt. Dadurch ist der Außendurchmesser des ersten Befestigungsbereichs 15 jedes Sicherungselements 1 separat an dem Innendurchmesser des Bolzens 2 angebunden.

Figur 12B zeigt eine Draufsicht eines Sicherungselements der Planetenträgervorrichtung gemäß der zwölften Ausführungsform. Zur Beschreibung der Figur 12B wird auf die Figur 10B verwiesen.

Figur 13A zeigt eine Schnittansicht einer Planetenträgervorrichtung gemäß einer dreizehnten Ausführungsform. Vorliegend sind zwei Sicherungselemente 1 bezogen auf den Bolzen 2 gegenüberliegend angeordnet. Der erste Trägeranlageabschnitt 11 ist plattenförmig gestaltet und erstreckt sich von dem Außenumfang des ersten Bolzenanlageabschnitts 13 ausgehend in radialer Richtung nach oben und nach unten . Die Breite des ersten Trägeranlageabschnitt 11 ist größer als der Innendurchmesser des Bolzens 2. Der Trägeranlageabschnitt 11 ist in einer Nut in dem Planetenträger 3 vorgesehen, die in radialer Richtung angeordnet ist. Der erste Bolzenanlageabschnitt 13 ist ringförmig gestaltet.

An dem Ende des hohlzylindrischen Abschnitts in axialer Richtung gegenüberliegend zu dem ersten Bolzenanlageabschnitt 13 ist eine Aufweitung mit einem Außendurchmesser vorgesehen. Der Außendurchmesser des hohlzylindrischen Abschnitts ist kleiner als der Außendurchmesser der Aufweitung. Der Außendurchmesser des hohlzylindrischen Abschnitts und der Außendurchmesser der Aufweitung sind mittels eines Übergangsbereichs, vorliegend einer umlaufenden Fase, verbunden.

Der Bolzen 2 weist in einem mittleren Bereich in der axialen Richtung eine Aushöhlung auf. Der Innendurchmesser der Aushöhlung ist größer als der Innendurchmesser des Bolzens 2. Der Innendurchmesser der Aushöhlung ist größer als der Außendurchmesser der Aufweitung. Der Innendurchmesser der Aushöhlung und der Innendurchmesser der Bohrung des Bolzens 2 sind über eine umlaufende Fase angebunden. Die Aushöhlung überdeckt die Aufweitung in axialer Richtung. Der Übergangsbereich der Aufweitung liegt an der umlaufenden Fase der Aushöhlung an und verhindert, dass das Sicherungselement sich in axialer Richtung aus dem Bolzen 2 bewegt. Insofern ist das Sicherungselement 1 mittels der Aufweitung an der Aushöhlung des Bolzens 2 angebunden und die Aufweitung bildet den Befestigungsbereich 15.

Vor einer Montage des Sicherungselements 1 ist die Aufweitung des hohlzylindrischen Abschnitts nicht ausgebildet. Der Außendurchmesser des hohlzylindrischen Abschnitts ist so dimensioniert, dass der hohlzylindrische Abschnitt den Innendurchmesser des Bolzens bei einer Montage berührt. Für eine Montage muss das Sicherungselement 1 mit einer Kraft eingepresst werden. Dabei verformt sich das stirnseitige Ende des hohlzylindrischen Abschnitts so, dass die Aufweitung gebildet wird. Wenn das Sicherungselement 1 vollständig in den Bolzen 2 eingepresst ist, liegt die umlaufende Fase der Aufweitung so an der Fase der Aushöhlung an, dass auf den Bolzen eine Vorspannkraft zwischen dem Vorsprung und dem Bolzenanlageabschnitt wirkt.

In montiertem Zustand berühren die erste Bolzenanlageabschnitte 13 der Sicherungselemente 1 die linke bzw. rechte Stirnfläche des Bolzens 2. Damit bildet der erste Bolzenanlageabschnitt 13 der Sicherungselemente 1 jeweils den ersten Befestigungsbereich 15. Dadurch ist das Sicherungselement 1 in dem Bolzen 2 gesichert und gleichzeitig ist der Bolzen 2 mittels der ersten Trägeranlageabschnitte 11 relativ zu dem Planetenträger 3 gesichert.

Figur 13B zeigt eine Draufsicht eines Sicherungselements der Planetenträgervorrichtung gemäß der dreizehnten Ausführungsform. Zur Beschreibung der Figur 13B wird auf die Figur 10B verwiesen.

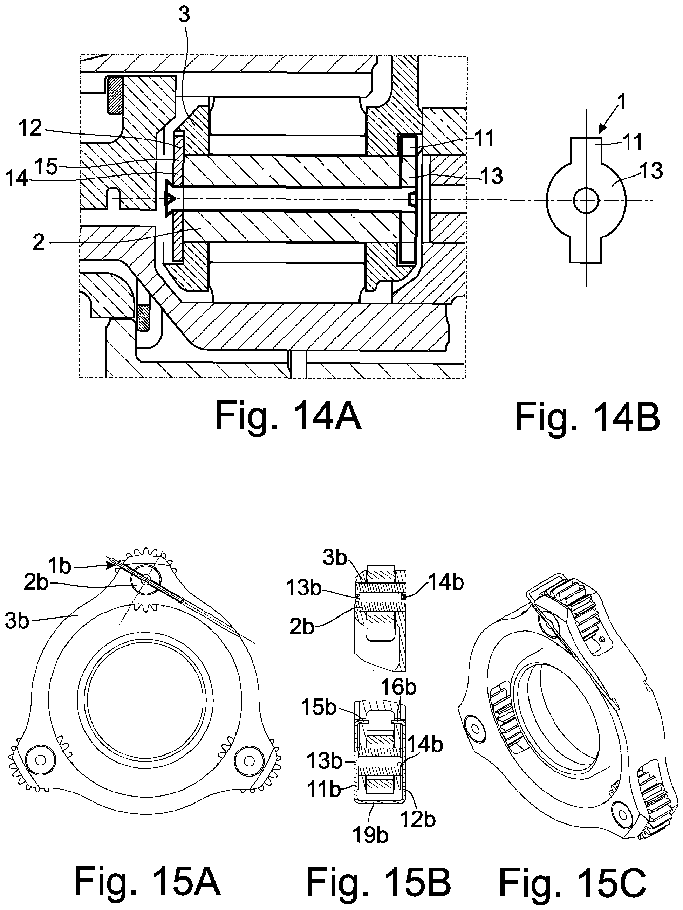

Figur 14A zeigt eine Schnittansicht einer Planetenträgervorrichtung gemäß einer vierzehnten Ausführungsform. In der vorliegenden Ausführungsform ist der erste Trägeranlageabschnitt 11 plattenförmig gestaltet und erstreckt sich in der radialen Richtung nach oben und nach unten. Der erste Trägeranlageabschnitt 11 ist in radial angeordneten Nuten in dem Planetenträger 3 vorgesehen. Der erste Bolzenanlageabschnitt 13 ist ringförmig gestaltet. Ein Außendurchmesser des ersten Bolzenanlageabschnitts 13 ist größer als der Innendurchmesser des Bolzens 2. Ein erster hohlzylindrischer Abschnitt erstreckt sich von dem ersten Bolzenanlageabschnitt 13 durch den Bolzen 2 und durch den zweiten Bolzenanlageabschnitt 14 hindurch. Der zweite Bolzenanlageabschnitt 14 bildet den ersten Befestigungsbereich 15.

Der zweite Bolzenanlageabschnitt 14 überschneidet in radialer Richtung den Bolzen 2 und ist in axialer Richtung gegenüber des ersten Bolzenanlageabschnitts 13 vorgesehen. Vorliegend ist der erste Befestigungsbereich 15 ringförmig ausgebildet. Der erste Befestigungsbereich 15 ist an einem Ende des ersten hohlzylindrischen Abschnitts mittels einer Verstemmung des linken Endes des hohlzylindrischen Abschnitts angebunden. Ein zweiter Trägeranlageabschnitt 12 erstreckt sich von dem ersten Befestigungsbereich 15 ringförmig radial auswärts. Der erste Befestigungsbereich 15 liegt an der linken Stirnseite des Bolzens 2 an.

Figur 14B zeigt eine Draufsicht eines Sicherungselements der Planetenträgervorrichtung gemäß der vierzehnten Ausführungsform. Zur Beschreibung der Figur 14B wird auf die Figur 10B verwiesen.

Figur 15A zeigt eine Draufsicht einer Planetenträgervorrichtung gemäß einer fünfzehnten Ausführungsform. In der vorliegenden Ausführungsform ist das Sicherungselement 2b mittels eines gebogenen Drahts mit kreisförmigem Querschnitt gebildet. Ein Bolzen 2b ist an einem Planetenträger 3b bezüglich einer axialen Richtung gelagert. Der Bolzen 2b ist hohl gestaltet ist und weist einen Innendurchmesser auf. Der Bolzen 2b weist an jedem Ende in axialer Richtung eine Nut auf, in dem je einer von einem ersten Bolzenanlageabschnitt 13 und einem zweiten Bolzenanlageabschnitt 14 vorgesehen ist. Der Planetenträger 3b weist Nuten auf, die mit den Nuten in dem Bolzen 2b fluchten und in denen je einer von einem ersten Trägeranlageabschnitt 11b und einem zweiten Trägeranlageabschnitt 12b vorgesehen ist.

Der erste Trägeranlageabschnitt 11b und der zweite Trägeranlageabschnitt 12b beschränken eine Bewegung des Sicherungselements 1b relativ zu dem Planetenträger 3b. Der erste Trägeranlageabschnitt 11b und der zweite Trägeranlageabschnitt 12b sind in radialer Richtung außerhalb des Bolzens 2b vorgesehen. Der erste Trägeranlageabschnitt 11b und der zweite Trägeranlageabschnitt 12b sind bezogen auf den Bolzen 2b in axialer Richtung gegenüberliegend angeordnet. Der erste Bolzenanlageabschnitt 13b und der zweite Bolzenanlageabschnitt 14b beschränken eine Bewegung des Sicherungselements 1b relativ zu dem Bolzen 2b. Der erste Bolzenanlageabschnitt 13b und der zweite Bolzenanlageabschnitt 14b überschneiden den Bolzen 2b in radialer Richtung.

Der Axialverbindungsabschnitt 19b erstreckt sich in axialer Richtung außerhalb des Planetenträgers 3b. Der Axialverbindungsabschnitt 19b verbindet den ersten Trägeranlageabschnitt 11b und den zweiten Trägeranlageabschnitt 12b. Der Axialverbindungsabschnitt 19b hat eine Länge, die größer ist als die Breite des Planetenträgers 3b in axialer Richtung.

Figur 15B zeigt eine Schnittansicht der Planetenträgervorrichtung gemäß der fünfzehnten Ausführungsform. Das Sicherungselement 1b ist mittels des ersten Befestigungsbereichs 15b und des zweiten Befestigungsbereichs 16b an dem Planetenträger 3b angebunden. Der erste und zweite Befestigungsbereich 15b, 16b bilden jeweils ein Ende des gebogenen Drahts des Sicherungselements 1b. Der erste und zweite Befestigungsbereich 15b, 16b erstrecken sich in axialer Richtung und sind in Bohrungen in dem Planetenträger 3b vorgesehen.

Figur 15C zeigt eine isometrische Ansicht der Planetenträgervorrichtung gemäß der fünfzehnten Ausführungsform. Zur Montage werden der erste und zweite Befestigungsbereich 15b, 16b des bügelförmigen Sicherungselements 1b in axialer Richtung auseinandergezogen. Anschließend wird das Sicherungselement 1b bezüglich der Nut in dem Planetenträger 3 und dem Bolzen 2 ausgerichtet und mit dem ersten und zweiten Befestigungsbereich 15b, 16b an den dafür vorgesehenen Bohrungen in dem Planetenträger 3 positioniert.

Das bügelförmige Sicherungselement 1b ist so vorgespannt, dass der erste und zweite Bolzenanlageabschnitt 13b, 14b mit dem Bozen 2 in Berührung kommen und der erste und zweite Trägeranlageabschnitt 11b, 12b mit dem Planetenträger 3 in Berührung kommen. Dabei verbiegen sich die beiden gegenüberliegenden Schenkel an denen jeweils Bolzen- und Trägeranlageabschnitte gebildet sind. Ausgehend von dem Axialverbindungsabschnitt 19b laufen die beiden Schenkel aufeinander zu, bis sie den Planetenträger berühren und parallel zueinander verlaufen. Das Sicherungselement 1b ist in radialer Richtung mit seinem Schwerpunkt an der Drehachse des Planetenrads angeordnet.

### Bezugszeichen

- 1, 1b: Sicherungselement
- 2, 2a, 2b: Bolzen
- 3, 3a, 3b: Planetenträger
- 4: Innenbolzen
- 11, 11b: Erster Trägeranlageabschnitt
- 12, 12b: Zweiter Trägeranlageabschnitt
- 12i: Dritter Trägeranlageabschnitt
- 12ii: Vierter Trägeranlageabschnitt
- 13, 13b: Erster Bolzenanlageabschnitt
- 14, 14b: Zweiter Bolzenanlageabschnitt
- 15, 15a, 15b: Erster Befestigungsbereich
- 16,16b: Zweiter Befestigungsbereich
- 17: Erster Zentralverbindungsabschnitt
- 17i: Zweiter Zentralverbindungsabschnitt
- 18: Radialverbindungsabschnitt
- 19b: Axialverbindungsabschnitt
- 20: Werkzeug

## Patentansprüche

1. Planetenträgervorrichtung mit einem Sicherungselement (1), einem Bolzen (2) und einem Planetenträger (3) eines Planetenradsatzes, wobei
das Sicherungselement (1) einen ersten Trägeranlageabschnitt (11), einen ersten Bolzenanlageabschnitt (13) und einen ersten Befestigungsbereich (15) aufweist,
der erste Bolzenanlageabschnitt (13) eine Bewegung des Sicherungselements (1) relativ zu dem Bolzen (2) beschränkt,
der erste Bolzenanlageabschnitt (13) den Bolzen (2) in radialer Richtung überschneidet,
der erste Trägeranlageabschnitt (11) eine Bewegung des Sicherungselements (1) relativ zu dem Planetenträger (3) beschränkt,
der erste Trägeranlageabschnitt (11) in einer radialen Richtung außerhalb des Bolzens (2) vorgesehen ist,
das Sicherungselement (1) mittels des ersten Befestigungsbereichs (15) an dem Bolzen (2) angebunden ist,
der Planetenträger (3) eine Anlageaussparung in radialer Richtung aufweist, in der der erste Trägeranlageabschnitt (11) vorgesehen ist, und
der Bolzen (2) an dem Planetenträger (3) bezüglich einer axialen Richtung gelagert ist.

2. Planetenträgervorrichtung nach Anspruch 1, **dadurch gekennzeichnet, dass**
der erste Bolzenanlageabschnitt (13) den ersten Befestigungsbereich (15) bildet,
der erste Befestigungsbereich (15) mittels einer zylindrischen Bohrung in dem Bolzen gestaltet ist, in der der Bolzenanlageabschnitt (13) gehalten wird,
das Sicherungselement (1) einen kreisförmigen Querschnitt hat, und
die Anlageaussparung des Planetenträgers (3) eine kreisförmige Bohrung ist, in der der erste Trägeranlageabschnitt (11) eingesetzt ist.

3. Planetenträgervorrichtung nach Anspruch 1, **dadurch gekennzeichnet, dass**
das Sicherungselement (1) ferner einen zweiten Bolzenanlageabschnitt (14) aufweist,
das Sicherungselement (1) einen kreisförmigen Querschnitt hat,
der zweite Bolzenanlageabschnitt (14) den Bolzen (2) in radialer Richtung überschneidet,
der zweite Bolzenanlageabschnitt (14) bezogen auf den ersten Bolzenanlageabschnitt (13) gegenüber dem ersten Trägeranlageabschnitt (11) angeordnet ist,
der erste Befestigungsbereich (15) zwischen dem ersten Bolzenanlageabschnitt (13) und dem zweiten Bolzenanlageabschnitt (14) angeordnet ist, und
der erste Befestigungsbereich (15) mittels einer Ausbauchung senkrecht zu der radialen Richtung gestaltet ist.

4. Planetenträgervorrichtung nach Anspruch 1, **dadurch gekennzeichnet, dass**
der Bolzen (2) hohl gestaltet ist,
das Sicherungselement (1) ferner einen ersten Zentralverbindungsabschnitt (17) und einen zweiten Trägeranlageabschnitt (12) aufweist,
der erste Befestigungsbereich (15) bezogen auf den Bolzen (2) in der axialen Richtung gegenüber dem ersten Bolzenanlageabschnitt (13) angeordnet ist und sich in radialer Richtung erstreckt,
der zweite Trägeranlageabschnitt (12) bezogen auf den Bolzen (2) in der axialen Richtung gegenüber dem ersten Trägeranlageabschnitt (11) angeordnet ist und sich in radialer Richtung außerhalb des Bolzens (2) erstreckt, und
das Sicherungselement (1) einen Zentralverbindungsabschnitt (17) aufweist, der den ersten Trägeranlageabschnitt (11) mit dem ersten Befestigungsbereich (15) verbindet und sich in axialer Richtung durch den Bolzen (2) hindurch erstreckt.

5. Planetenträgervorrichtung nach Anspruch 3, **dadurch gekennzeichnet, dass**
das Sicherungselement (1) ferner einen dritten Trägeranlageabschnitt (12i), einen vierten Trägeranlageabschnitt (12ii), einen zweiten Bolzenanlageabschnitt (14), zweiten Befestigungsbereich (16) einen zweiten Zentralverbindungsabschnitt (17i) und einen Radialverbindungsabschnitt (18) aufweist,
der dritte Trägeranlageabschnitt (12i) und vierte Trägeranlageabschnitt (12ii), der zweite Bolzenanlageabschnitt (14) und der zweite Befestigungsbereich (16) sich bezogen auf eine Mittelachse des Bolzens (2) in eine andere radiale Richtung bezüglich des ersten und zweiten Trägeranlageabschnitts (11, 12), des ersten Bolzenanlageabschnitts (13) und des ersten Befestigungsbereichs (15) erstrecken,
der Bolzen (2) hohl gestaltet ist,
der Planetenträger (3) eine zweite Anlageaussparung in radialer Richtung aufweist, in der der zweite Trägeranlageabschnitt (12) vorgesehen ist,
der zweite Zentralverbindungsabschnitt (17i) den zweiten Bolzenanlageabschnitt (12i) mit dem zweiten Befestigungsbereich (16) verbindet und sich in axialer Richtung durch den Bolzen (2) hindurch erstreckt, und
der Radialverbindungsabschnitt (18) den ersten Trägeranlageabschnitt (11) und den dritten Trägeranlageabschnitt (12i) miteinander verbindet.

6. Planetenträgervorrichtung nach Anspruch 1, **dadurch gekennzeichnet, dass**
zwei Sicherungselemente (1) bezüglich des Bolzens (2) gegenüberliegend angeordnet sind,
der Bolzen (2) hohl gestaltet ist und einen Innendurchmesser aufweist,
der erste Trägeranlageabschnitt (11) und der erste Bolzenanlageabschnitt (13) plattenförmig gestaltet sind,
der erste Befestigungsbereich (15) hohlzylinderförmig gestaltet ist und sich in der axialen Richtung innerhalb des Bolzens (2) erstreckt, und
ein Außendurchmesser des ersten Befestigungsbereichs (15) an dem Innendurchmesser des Bolzens (2) angebunden ist.

7. Planetenträgervorrichtung nach Anspruch 1, **dadurch gekennzeichnet, dass**
das Sicherungselement (1) ferner einen zweiten Trägeranlageabschnitt (12) und einen zweiten Bolzenanlageabschnitt (14) aufweist,
der Bolzen (2) hohl gestaltet ist und einen Innendurchmesser aufweist,
der zweite Trägeranlageabschnitt (12) und der zweite Bolzenanlageabschnitt (14) bezogen auf den Bolzen (2) in der axialen Richtung jeweils gegenüber dem ersten Trägeranlageabschnitt (11) und dem zweiten Bolzenanlageabschnitt (14) angeordnet ist und sich in radialer Richtung außerhalb des Bolzens (2) erstreckt,
der zweite Trägeranlageabschnitt (12) und der erste Befestigungsbereich (15) bezogen auf den Bolzen (2) in axialer Richtung gegenüber dem ersten Trägeranlageabschnitt (11) angeordnet ist und sich in radialer Richtung erstreckt,
das Sicherungselement (1) einen ersten Zentralverbindungsabschnitt (17) aufweist, der den ersten Trägeranlageabschnitt (11) mit dem ersten Befestigungsbereich (15) verbindet, sich durch den Bolzen (2) hindurch erstreckt und hohlzylinderförmig gestaltet ist, und
der erste Befestigungsbereich (15) mittels Umformens eines Endabschnitts des ersten Zentralverbindungsabschnitts (17) ringförmig gestaltet ist und einen Außendurchmesser aufweist, der größer als der Innendurchmesser des Bolzens (2) ist.

8. Planetenträgervorrichtung nach Anspruch 1, **dadurch gekennzeichnet, dass**
zwei Sicherungselemente (1) bezogen auf den Bolzen (2) gegenüberliegend angeordnet sind,
der Bolzen (2) hohl gestaltet ist,
der erste Trägeranlageabschnitt (11) plattenförmig gestaltet ist,
der erste Bolzenanlageabschnitt (13) ringförmig gestaltet ist, und
der erste Bolzenanlageabschnitt (13) von einem der Sicherungselemente (1) den ersten Befestigungsbereich (15) bildet.

9. Planetenträgervorrichtung nach Anspruch 8, **gekennzeichnet durch**
einen Innenbolzen (4), wobei
der Innenbolzen (4) zylindrisch gestaltet ist, sich innerhalb des Bolzens (2) in axialer Richtung erstreckt und an beiden Enden in axialer Richtung jeweils einen zylindrischen Vorsprung aufweist, und
ein Innendurchmesser des ersten Bolzenanlageabschnitts (13) an einem Außendurchmesser des zylindrischen Vorsprungs angebunden ist.

10. Planetenträgervorrichtung nach Anspruch 8, **dadurch gekennzeichnet, dass**
der erste Bolzenanlageabschnitt (13) einen hohlzylindrischen Abschnitt aufweist, der sich von dem ersten Bolzenanlageabschnitt (13) innerhalb des Bolzens (2) erstreckt, und
die hohlzylindrischen Abschnitte der beiden gegenüberliegend angeordneten Sicherungselemente (1) innerhalb des Bolzens (2) aneinander angebunden sind.

11. Planetenträgervorrichtung nach Anspruch 8, **dadurch gekennzeichnet, dass**
der Bolzen (2) einen Innendurchmesser aufweist,
der erste Bolzenanlageabschnitt (13) einen hohlzylindrischen Abschnitt aufweist, der sich von dem ersten Bolzenanlageabschnitt (13) innerhalb des Bolzens (2) erstreckt,
der hohlzylindrische Abschnitt den ersten Befestigungsbereich (15) aufweist, und
ein Außendurchmesser des hohlzylindrischen Abschnitts mittels des ersten Befestigungsbereichs (15) an dem Innendurchmesser des Bolzens (2) angebunden ist.

12. Planetenträgervorrichtung nach Anspruch 1, **dadurch gekennzeichnet, dass**
zwei Sicherungselemente (1) bezogen auf den Bolzen (2) gegenüberliegend angeordnet sind,
der Bolzen (2) hohl gestaltet ist und einen Innendurchmesser aufweist,
der erste Trägeranlageabschnitt (11) plattenförmig gestaltet ist,
der erste Bolzenanlageabschnitt (13) ringförmig gestaltet ist,
der erste Bolzenanlageabschnitt (13) einen hohlzylindrischen Abschnitt aufweist, der sich von dem ersten Bolzenanlageabschnitt (13) innerhalb des Bolzens (2) erstreckt,
an dem Ende des hohlzylindrischen Abschnitts in axialer Richtung gegenüberliegend zu dem ersten Bolzenanlageabschnitt (13) eine Aufweitung mit einem Außendurchmesser vorgesehen ist,
der Außendurchmesser des hohlzylindrischen Abschnitts kleiner als der Außendurchmesser der Aufweitung ist,
der Außendurchmesser des hohlzylindrischen Abschnitts größer als der Innendurchmesser des Bolzens ist,
der Bolzen (2) in einem mittleren Bereich in der axialen Richtung eine Aushöhlung mit einem Innendurchmesser aufweist,
der Innendurchmesser der Aushöhlung größer als der Innendurchmesser des Bolzens (2) ist,
der Innendurchmesser der Aushöhlung größer als der Außendurchmesser der Aufweitung ist,
die Aushöhlung die Aufweitung in axialer Richtung überdeckt, und
die Aufweitung den ersten Befestigungsbereich (15) bildet und an der Aushöhlung angebunden ist.

13. Planetenträgervorrichtung nach Anspruch 1, **dadurch gekennzeichnet, dass**
das Sicherungselement (1) ferner einen ersten hohlzylindrischen Abschnitt, einen zweiten Trägeranlageabschnitt (12) und einen zweiten Bolzenanlageabschnitt (14) aufweist,
der Bolzen (2) hohl gestaltet ist und einen Innendurchmesser aufweist,
der erste Trägeranlageabschnitt (11) plattenförmig gestaltet ist,
der erste Bolzenanlageabschnitt (13) ringförmig gestaltet ist,
ein Außendurchmesser des ersten Bolzenanlageabschnitts (13) größer als der Innendurchmesser des Bolzens (2) ist,
der erste hohlzylindrische Abschnitt sich von dem ersten Bolzenanlageabschnitt (13) aus durch den Bolzen (2) hindurch erstreckt,
der zweite Bolzenanlagebereich (14) in radialer Richtung den Bolzen (2) überschneidet, bezogen auf den Bolzen (2) in axialer Richtung gegenüber des ersten Bolzenanlageabschnitts (13) vorgesehen ist und zusammen mit dem ersten Bolzenanlagebereich (13) den ersten Befestigungsbereich (15) bildet,
der erste Befestigungsbereich (15) an einem Ende des ersten hohlzylindrischen Abschnitts angebunden ist, und
sich der zweite Trägeranlageabschnitt (12) von dem ersten Befestigungsbereich (15) ringförmig radial auswärts erstreckt.

14. Planetenträgervorrichtung mit einem Bolzen (2a) und einem Planetenträger (3) eines Planetenradsatzes, wobei
der Bolzen (2a) an dem Planetenträger (3a) bezüglich einer axialen Richtung gelagert ist,
der Bolzen (2a) an einem Ende in axialer Richtung einen ersten Befestigungsbereich (15a) aufweist,
ein Außendurchmesser des ersten Befestigungsbereichs (15a) an einem Innendurchmesser des Planetenträgers (3a) angebunden ist,
der erste Befestigungsbereich (15a) gerändelt ist, und
eine umlaufende Nut bezogen auf den ersten Befestigungsbereich (15a) gegenüber von dem Ende des Bolzens (2a) in axialer Richtung angrenzend an den Befestigungsbereich (15a) vorgesehen ist.

15. Planetenträgervorrichtung mit einem Sicherungselement (1b), einem Bolzen (2b) und einem Planetenträger (3b) eines Planetenradsatzes, wobei
das Sicherungselement (1b) einen ersten Trägeranlageabschnitt (11b), einen zweiten Trägeranlageabschnitt (12b), einen ersten Bolzenanlageabschnitt (13b), einen zweiten Bolzenanlageabschnitt (14b), einen ersten Befestigungsbereich (15b), einen zweiten Befestigungsbereich (16b) und einen Axialverbindungsabschnitt (19b) aufweist,
der Bolzen (2b) an dem Planetenträger (3b) bezüglich einer axialen Richtung gelagert ist,
der Bolzen (2b) hohl gestaltet ist,
der erste Trägeranlageabschnitt (11b) und der zweite Trägeranlageabschnitt (12b) eine Bewegung des Sicherungselements (1b) relativ zu dem Planetenträger (3b) beschränken,
der erste Trägeranlageabschnitt (11b) und der zweite Trägeranlageabschnitt (12b) in radialer Richtung außerhalb des Bolzens (2b) vorgesehen sind,
der erste Trägeranlageabschnitt (11b) und der zweite Trägeranlageabschnitt (12b) bezogen auf den Bolzen (2b) in einer axialen Richtung gegenüberliegend zueinander angeordnet sind,
der erste Bolzenanlageabschnitt (13b) und der zweite Bolzenanlageabschnitt (14) eine Bewegung des Sicherungselements (1b) relativ zu dem Bolzen (2b) beschränken,
der erste Bolzenanlageabschnitt (13b) und der zweite Bolzenanlageabschnitt (14b) in radialer Richtung den Bolzen (2b) überschneiden,
das Sicherungselement (1b) mittels des ersten Befestigungsbereichs (15b) und des zweiten Befestigungsbereichs (16b) an dem Planetenträger (3b) angebunden ist, und
der Axialverbindungsabschnitt (19b) sich in einer axialen Richtung außerhalb des Planetenträgers (3b) erstreckt und den ersten Trägeranlageabschnitt (11b) und den zweiten Trägeranlageabschnitt (12b) verbindet.
